(19) Europäisches Patentamt
European Patent Office
Office européen des brevets

(11) EP 3 914 644 B1

(12) **EUROPEAN PATENT SPECIFICATION**

(45) Date of publication and mention of the grant of the patent:
**30.07.2025 Bulletin 2025/31**

(21) Application number: **20701073.7**

(22) Date of filing: **24.01.2020**

(51) International Patent Classification (IPC):
***C08L 23/12*** *(2006.01)* ***C08F 210/06*** *(2006.01)*

(52) Cooperative Patent Classification (CPC):
(C-Sets available)
**C08L 23/12;** C08F 210/06; C08L 2203/14; C08L 2205/035; C08L 2205/24; C08L 2207/02; C08L 2310/00 (Cont.)

(86) International application number:
**PCT/EP2020/051721**

(87) International publication number:
**WO 2020/152315 (30.07.2020 Gazette 2020/31)**

(54) **FOAMABLE POLYPROPYLENE COMPOSITION WITH EXCELLENT MECHANICAL PERFORMANCE**

SCHÄUMBARE POLYPROPYLENZUSAMMENSETZUNG MIT AUSGEZEICHNETER MECHANISCHER LEISTUNG

COMPOSITION DE POLYPROPYLÈNE MOUSSANTE PRÉSENTANT UNE EXCELLENTE PERFORMANCE MÉCANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2019 EP 19153730**

(43) Date of publication of application:
**01.12.2021 Bulletin 2021/48**

(73) Proprietors:
- **Abu Dhabi Polymers Co. Ltd (Borouge) - Sole Proprietorship L.L.C.**
  **Abu Dhabi (AE)**
- **Borealis GmbH**
  **1020 Vienna (AT)**

(72) Inventors:
- **MILEVA, Daniela**
  **4021 Linz (AT)**
- **KAHLEN, Susanne**
  **4021 Linz (AT)**
- **GRESTENBERGER, Georg**
  **4021 Linz (AT)**
- **JERABEK, Michael**
  **4021 Linz (AT)**
- **SAGEDER, Anton**
  **4021 Linz (AT)**
- **LUMMERSTORFER, Thomas**
  **4021 Linz (AT)**
- **KNIESEL, Claudia**
  **4021 Linz (AT)**

(74) Representative: **Maiwald GmbH**
**Elisenhof**
**Elisenstraße 3**
**80335 München (DE)**

(56) References cited:
**EP-A1- 3 112 417** **EP-A1- 3 330 315**
**WO-A1-2016/005301**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/6465;**
**C08L 23/12, C08L 23/16, C08L 23/12, C08K 3/04;**
**C08L 23/12, C08L 23/16, C08L 23/12, C08K 3/34, C08K 3/04;**
**C08L 23/12, C08L 23/16, C08L 23/12, C08L 23/16, C08L 23/0815, C08K 3/34, C08K 3/04;**
C08F 210/06, C08F 210/16, C08F 2500/06, C08F 2500/12, C08F 2500/27, C08F 2500/35

## Description

The present invention is directed to a foamable polypropylene composition (C) comprising a heterophasic propylene copolymer (HECO1) having a melt flow rate $MFR_2$ (230°C, 2.16 kg) measured according to ISO 1133 in the range from 3 to 10 g/10min and at least one foaming agent (FA) selected from chemical and physical foaming agents. Further, the present invention is directed to the use of said foamable polypropylene composition (C) for the production of a foamed part as well as a foamed part comprising said foamable polypropylene composition (C).

Recent demand for plastics in the automotive industry is towards weight reduction with preservation of the mechanical property profile, particularly stiffness and toughness, and surface appearance. One approach to prepare polypropylene compositions featuring a reduced density is the application of compositions containing inorganic fillers or glass fibres. However, the density reduction by using inorganic filler filled or glass fibre reinforced polypropylene compounds is limited. Therefore, a possible next step to support further weight reduction is foaming during the injection-moulding conversion step which can be applied for non-visible and visible automotive parts. Foamed parts have the advantage of reduced density but the disadvantage of poor surface and mechanical properties. Thus, the majority of foamed parts are not used for visible interior / exterior applications due to inhomogeneous surface appearance and/or poor toughness/stiffness balance. For example, EP 3 330 315 A1 refers to a polypropylene composition (C), comprising a) a first heterophasic propylene copolymer (HECO1) having a comonomer content of the xylene soluble fraction (XCS) equal or above 40.0 mol-%, said first heterophasic propylene copolymer comprising i) a first matrix being a first propylene polymer (M1) and ii) a first elastomeric propylene copolymer (E1) being dispersed in said first matrix, b) a second heterophasic propylene copolymer (HECO2) having a comonomer content of the xylene soluble fraction (XCS) below 39.0 mol-%, said second heterophasic propylene copolymer comprising iii) a second matrix being a second propylene polymer (M2) and iv) a second elastomeric propylene copolymer (E1) being dispersed in said second matrix, c) an inorganic filler (F), d) optionally a high density polyethylene (HDPE), and e) optionally a plastomer (PL) being a copolymer of ethylene and a C4 to C8 $\alpha$-olefin. WO2016/005301 A1 refers to a mineral-filled polypropylene composition and EP 3 112 417 A1 refers to a fiber reinforced composition.

Accordingly, there is a need in the art for a foamable polypropylene composition proving an excellent mechanical property profile in terms of toughness/stiffness balance accompanied by an excellent surface appearance in foamed parts.

Therefore, it is an object of the present invention to provide a foamable polypropylene composition providing a good balance of mechanical properties in terms of toughness/stiffness balance and excellent surface appearance in foamed parts.

The finding of the present invention is that composition comprising a heterophasic polypropylene and at least one foaming agent (FA) selected from chemical and physical foaming agents is highly suitable for the preparation of foamed parts showing a good balance of mechanical properties in terms of toughness/stiffness balance and excellent surface appearance in foamed parts.

Accordingly, the present invention is directed to a foamable polypropylene composition (C), comprising

a) a heterophasic propylene copolymer (HECO1) having a melt flow rate $MFR_2$ (230°C, 2.16 kg) measured according to ISO 1133 in the range from 3 to 10 g/10min and a xylene cold soluble (XCS) fraction determined at 25°C according to ISO 16152 in the range of 10.0 to 30.0 wt.-% , said heterophasic propylene copolymer (HECO1) comprising

i) a matrix (M1) being a propylene polymer (PP1) and
ii) an elastomeric propylene copolymer (E1) being dispersed in said matrix,

b) a propylene homopolymer (H-PP),
c) optionally an inorganic filler (F), wherein the inorganic filler is talc and/or carbon black, and
d) at least one foaming agent (FA) selected from chemical and physical foaming agents, whereby the composition (C) comprises:

i) 68.0 to 96.99 wt.-% of the heterophasic propylene copolymer (HECO1),
ii) 3.0 to 30.0 wt.-% of the propylene homopolymer (H-PP),
iii) 0 to 18.0 wt.-% of the inorganic filler (F), and
iv) 0.01 to 4.0 wt.-% of the foaming agent (FA),

based on the overall polypropylene composition (C).

According to one embodiment of the present invention, the heterophasic propylene copolymer (HECO1) has i) a comonomer content of the xylene cold soluble (XCS) ≤ 45.0 mol.-%, preferably ≤ 40.0 mol-%, more preferably ≤ 39.0 mol.-%, and most preferably ≤ 35.0 mol.-%, e.g. between 5.0 and 40.0 mol.-%, preferably between 20.0 and 39.0 mol.-%, more preferably between 23.0 and 37.0 mol.-%, and most preferably between 25.0 and 35.0 mol.-%, and/or ii) an intrinsic

viscosity (IV) of the xylene cold soluble (XCS) fraction > 3.5 dl/g.

According to another embodiment of the present invention, further comprising a heterophasic propylene copolymer (HECO2) comprising i) a matrix (M2) being a propylene polymer (PP2) and ii) an elastomeric propylene copolymer (E2) being dispersed in said matrix.

According to still another embodiment of the present invention, the heterophasic propylene copolymer (HECO2) has i) a melt flow rate $MFR_2$ (230°C, 2.16 kg) measured according to ISO 1133 in the range from 50 to 120 g/10min, and/or ii) a xylene cold soluble (XCS) fraction in the range of 12.0 to 35.0 wt.-%, and/or iii) a comonomer content of the xylene cold soluble (XCS) fraction in the range from 35.0 to 65.0 mol-%, and/or iv) an intrinsic viscosity (IV) of the xylene cold soluble (XCS) fraction < 3.5 dl/g.

According to one embodiment of the present invention, the foamable polypropylene composition further comprises a high density polyethylene (HDPE) and/or a plastomer (PL) being a copolymer of ethylene and a $C_4$ to $C_8$ $\alpha$-olefin.

According to another embodiment of the present invention, the matrix (M1) of the heterophasic propylene copolymer (HECO1) and/or the matrix (M2) of the heterophasic propylene copolymer (HECO2) has/have a melt flow rate $MFR_2$ (230°C, 2.16 kg) measured according to ISO 1133 in the range from 50.0 to 200.0 g/10min.

According to still another embodiment of the present invention, the propylene homopolymer (H-PP), preferably a semicrystalline propylene homopolymer (H-PP), has i) a melt flow rate $MFR_2$ (230°C) determined according to ISO 1133 in the range of 40.0 to 120.0 g/10 min, and/or ii) a melting temperature Tm in the range from 158 to 168°C.

According to one embodiment of the present invention, the foaming agent (FA) is a chemical foaming agent, preferably a bicarbonate or a mixture of citric acid and bicarbonate.

According to another embodiment of the present invention, the foamable polypropylene composition (C) has before foaming

i) a melt flow rate $MFR_2$ (230°C) determined according to ISO 1133 in the range of 1.0 to 40.0 g/10 min, and/or
ii) a Charpy Impact Strength (NIS+23) measured according to ISO 179-1eA:2000 at +23°C of at least 14 kJ/$m^2$, like in the range of 14 to 60 kJ/$m^2$, and/or
iii) a flexural modulus according to ISO 178 on plaques of 2 mm thickness of at least 1300 MPa, like in the range of 1300 to 2600 MPa, and/or
iv) a puncture energy measured according to ISO 6603-2 (on 60x60x2 $mm^3$ specimens) at +23°C of at least 28 J, like in the range of 28 to 38 J.

According to still another embodiment of the present invention, the foamable polypropylene composition (C) has after foaming on plaques of 3 mm thickness

i) a flexural modulus according to ISO 178 of at least 800 MPa, like in the range of 800 to 1900 MPa, and/or
ii) a puncture energy measured according to ISO 6603-2 (on 60x60x2 $mm^3$ specimens) at +23°C of at least 10 J, like in the range of 10 to 28 J.

The present invention is also directed to the use of the foamable polypropylene composition (C) as defined herein for the production of a foamed part.

The present invention is further directed to a foamed part, preferably foamed automotive part, comprising the foamable polypropylene composition (C) as defined herein.

In the following, the present invention is described in more detail.

The inventive foamable polypropylene composition (C) comprises a heterophasic propylene copolymer (HECO1) comprising a matrix (M1) being a propylene polymer (PP1) and an elastomeric propylene copolymer (E1) being dispersed in said matrix. Thus the matrix (M1) contains (finely) dispersed inclusions being not part of the matrix (M1) and said inclusions contain the elastomeric propylene copolymer (E1). The term inclusion indicates that the matrix (M1) and the inclusion form different phases as defined below.

Further, the inventive foamable polypropylene composition comprises at least one foaming agent (FA) selected from chemical and physical foaming agents.

It is appreciated that the foamable polypropylene composition optionally comprises a propylene homopolymer (H-PP) and/or an inorganic filler (F).

Accordingly, it is preferred that the foamable polypropylene composition (C) comprises

i) 68.0 to 96.99 wt.-%, more preferably from 70.0 to 84.98 wt.-%, of the heterophasic propylene copolymer (HECO1),
ii) 3.0 to 30.0 wt.-%, more preferably from 3.0 to 23.0 wt.-%, of the propylene homopolymer (H-PP),
iii) 0 to 18.0 wt.-%, more preferably from 0 to 15.0 wt.-%, of the inorganic filler (F), and
iv) 0.01 to 4.0 wt.-%, more preferably from 0.02 to 3.5 wt.-%, of the foaming agent (FA),

based on the overall polypropylene composition (C).

It is appreciated that the amounts for the components i) to iv) in the polypropylene composition (C) are selected in the given ranges, so that they add up to 100 wt.-%.

For example, the foamable polypropylene composition (C) comprises,

i) 73.0 to 89.99 wt.-%, more preferably from 73.5 to 84.98 wt.-%, of the heterophasic propylene copolymer (HECO1),
ii) 10.0 to 25.0 wt.-%, more preferably from 15.0 to 25.0 wt.-%, of the propylene homopolymer (H-PP), and
iii) 0.01 to 4.0 wt.-%, more preferably from 0.02 to 3.5 wt.-%, of the foaming agent (FA),

based on the overall polypropylene composition (C).

It is appreciated that the amounts for the components i) to iii) in the polypropylene composition (C) are selected in the given ranges, so that they add up to 100 wt.-%.

That is to say, in this embodiment, the foamable polypropylene composition (C) is preferably free of the inorganic filler (F).

Alternatively, the foamable polypropylene composition (C) comprises the inorganic filler (F). In this embodiment, the foamable polypropylene composition (C) preferably comprises

i) 68.0 to 93.99 wt.-%, more preferably from 70.0 to 84.98 wt.-%, of the heterophasic propylene copolymer (HECO1),
ii) 3.0 to 30.0 wt.-%, more preferably from 3.0 to 23.0 wt.-%, of the propylene homopolymer (H-PP),
iii) 3.0 to 18.0 wt.-%, more preferably from 3.0 to 15.0 wt.-%, of the inorganic filler (F), and
iv) 0.01 to 4.0 wt.-%, more preferably from 0.02 to 3.5 wt.-%, of the foaming agent (FA),

based on the overall polypropylene composition (C).

It is appreciated that the amounts for the components i) to iv) in the polypropylene composition (C) are selected in the given ranges, so that they add up to 100 wt.-%.

Preferably, the foamable polypropylene composition (C) is obtained by melt blending the first heterophasic propylene copolymer (HECO1) comprising a matrix (M1) being the propylene polymer (PP1) and a dispersed phase being the elastomeric propylene copolymer (E1), the optional propylene homopolymer (H-PP), the optional inorganic filler (F), and the foaming agent (FA).

According to one embodiment of the present invention, the foamable polypropylene composition (C) further comprises a heterophasic propylene copolymer (HECO2) which is different from the heterophasic propylene copolymer (HECO1).

Said heterophasic propylene copolymer (HECO2) comprises a matrix (M2) being a propylene polymer (PP2) and an elastomeric propylene copolymer (E2) being dispersed in said matrix. Thus the matrix (M2) contains (finely) dispersed inclusions being not part of the matrix (M2) and said inclusions contain the elastomeric propylene copolymer (E2).

Therefore, in case the foamable polypropylene composition (C) comprises the heterophasic propylene copolymer (HECO2), the foamable polypropylene composition (C) comprises a heterophasic system comprising a matrix (M) formed by the propylene polymer (PP1) and the propylene polymer (PP2), and the first elastomeric propylene copolymer (E1) and the second elastomeric propylene copolymer (E2) are dispersed in said matrix (M). Thus the matrix (M) contains (finely) dispersed inclusions being not part of the matrix (M) and said inclusions contain the elastomeric propylene copolymer (E1) and the elastomeric propylene copolymer (E2).

If the foamable polypropylene composition (C) comprises the heterophasic propylene copolymer (HECO2), the foamable polypropylene composition (C) preferably further comprises a high density polyethylene (HDPE) and/or a plastomer (PL) being a copolymer of ethylene and a $C_4$ to $C_8$ $\alpha$-olefin, more preferably a high density polyethylene (HDPE) and a plastomer (PL) being a copolymer of ethylene and a $C_4$ to $C_8$ $\alpha$-olefin.

Preferably, the foamable polypropylene composition (C) contains the propylene polymer (PP1) and the propylene polymer (PP2) forming the matrix (M) in a ratio of 1:1 to 1:3 and the elastomeric propylene copolymer (E1) and the elastomeric propylene copolymer (E2) in a ratio of 1:1 to 1:3.

Preferably, the foamable polypropylene composition (C) is obtained by melt blending the first heterophasic propylene copolymer (HECO1) comprising a matrix (M1) being the propylene polymer (PP1) and a dispersed phase being the elastomeric propylene copolymer (E1), the second heterophasic propylene copolymer (HECO2) comprising a matrix (M2) being the propylene polymer (PP2) and a dispersed phase being the elastomeric propylene copolymer (E2), the optional inorganic filler (F), the at least one foaming agent (FA), optionally the high density polyethylene (HDPE) and optionally the plastomer (PL). Melt blending of said first heterophasic propylene copolymer (HECO1) and said second heterophasic propylene copolymer (HECO2) results in a heterophasic system wherein the propylene polymer (PP1) and the propylene polymer (PP2) form the matrix (M) and the elastomeric propylene copolymer (E1) and the elastomeric propylene copolymer (E2) form the dispersed phase.

Preferably, the foamable polypropylene composition (C) according to this invention comprises as polymer

components only the heterophasic propylene copolymer (HECO1), the optional propylene homopolymer (H-PP), the optional heterophasic propylene copolymer (HECO2), the optional high density polyethylene (HDPE) and the optional plastomer (PL). In other words, the foamable polypropylene composition (C) may contain further additives but no other polymer in an amount exceeding 5.0 wt.-%, more preferably exceeding 3.0 wt.-%, like exceeding 1.0 wt.-%, based on the total foamable polypropylene composition (C). One additional polymer which may be present in such low amounts is a polyethylene which is a reaction by-product obtained by the preparation of the polypropylene composition (C). Accordingly, it is in particular appreciated that the instant polypropylene composition (C) contains only the heterophasic propylene copolymer (HECO1), the optional propylene homopolymer (H-PP), the optional heterophasic propylene copolymer (HECO2), the optional high density polyethylene (HDPE), the optional plastomer (PL) and optionally polyethylene in amounts as mentioned in this paragraph.

The foamable polypropylene composition (C) of the present invention may include additives (AD).

Accordingly, it is preferred that the polypropylene composition (C) further comprises 0.0 to 5.0 wt.-%, more preferably 0.05 to 4.0 wt.-%, still more preferably 0.1 to 3.0 wt.-% of additives (AD), based on the overall weight of the foamable polypropylene composition (C). The additives (AD) are described in more detail below.

It is preferred that the foamable polypropylene composition (C) has before foaming a moderate melt flow rate. Thus, it is preferred that the melt flow rate $MFR_2$ (230°C, 2.16 kg) determined according to ISO 1133 of the polypropylene composition (C) is in the range of 1.0 to 40.0 g/10 min, more preferably in the range of 2.0 to 35.0 g/10 min, still more preferably in the range of 4.0 to 28.0 g/10 min, like in the range of 5.0 to 23.0 g/10 min.

Further, it is preferred that the foamable polypropylene composition (C) before foaming is featured by a rather high flexural modulus determined on compact (non-foamed) injection-moulded specimen. Accordingly, it is preferred that the foamable polypropylene composition (C) has a flexural modulus according to ISO 178 on plaques of 2 mm thickness of at least 1300 MPa, like in the range of 1300 to 2600 MPa.

Additionally or alternatively to the previous paragraph, it is preferred that the foamable polypropylene composition (C) before foaming has a Charpy Impact Strength (NIS+23) measured according to ISO 179-1eA:2000 at +23°C of at least 14 $kJ/m^2$, like in the range of 14 to 60 $kJ/m^2$.

Additionally or alternatively to the previous paragraph, it is preferred that the foamable polypropylene composition (C) before foaming has a puncture energy measured according to ISO 6603-2 (on 60x60x2 $mm^3$ specimens) at +23°C of at least 28 J, like in the range of 28 to 38 J.

Thus, it is preferred that the foamable polypropylene composition (C) before foaming has

i) a melt flow rate $MFR_2$ (230°C) determined according to ISO 1133 in the range of 1.0 to 40.0 g/10 min, and/or
ii) a Charpy Impact Strength (NIS+23) measured according to ISO 179-1eA:2000 at +23°C of at least 14 $kJ/m^2$, like in the range of 14 to 60 $kJ/m^2$, and/or
iii) a flexural modulus according to ISO 178 on plaques of 2 mm thickness of at least 1300 MPa, like in the range of 1300 to 2600 MPa, and/or
iv) a puncture energy measured according to ISO 6603-2 (on 60x60x2 $mm^3$ specimens) at +23°C of at least 28 J, like in the range of 28 to 38 J.

For example, the foamable polypropylene composition (C) before foaming has

i) a melt flow rate $MFR_2$ (230°C) determined according to ISO 1133 in the range of 1.0 to 40.0 g/10 min, and
ii) a Charpy Impact Strength (NIS+23) measured according to ISO 179-1eA:2000 at +23°C of at least 14 $kJ/m^2$, like in the range of 14 to 60 $kJ/m^2$, and
iii) a flexural modulus according to ISO 178 on plaques of 2 mm thickness of at least 1300 MPa, like in the range of 1300 to 2600 MPa, and
iv) a puncture energy measured according to ISO 6603-2 (on 60x60x2 $mm^3$ specimens) at +23°C of at least 28 J, like in the range of 28 to 38 J.

It is preferred that the foamable polypropylene composition (C) has after foaming on plaques of 3 mm thickness a flexural modulus according to ISO 178 of at least 800 MPa, like in the range of 800 to 1900 MPa.

Additionally or alternatively, the foamable polypropylene composition (C) has after foaming on plaques of 3 mm thickness a puncture energy measured according to ISO 6603-2 (on 60x60x2 $mm^3$ specimens) at +23°C of at least 10 J, like in the range of 10 to 28 J.

Preferably, the foamable polypropylene composition (C) has after foaming on plaques of 3 mm thickness a flexural modulus according to ISO 178 of at least 800 MPa, like in the range of 800 to 1900 MPa, and a puncture energy measured according to ISO 6603-2 (on 60x60x2 $mm^3$ specimens) at +23°C of at least 10 J, like in the range of 10 to 28 J.

In the following, the single components of the foamable polypropylene composition (C) are described in more detail.

The heterophasic propylene copolymer (HECO1)

The inventive polypropylene composition (C) comprises a heterophasic propylene copolymer (HECO1).

The heterophasic propylene copolymer (HECO1) according to this invention comprises a matrix (M1) being the propylene polymer (PP1) and dispersed therein an elastomeric propylene copolymer being the elastomeric propylene copolymer (E1). Thus the matrix (M1) contains (finely) dispersed inclusions being not part of the matrix (M1) and said inclusions contain the elastomeric propylene copolymer (E1). The term inclusion indicates that the matrix (M1) and the inclusion form different phases within the heterophasic propylene copolymer (HECO1). The presence of second phases or the so called inclusions are for instance visible by high resolution microscopy, like electron microscopy or atomic force microscopy, or they can be detected by dynamic mechanical thermal analysis (DMTA). Specifically, in DMTA the presence of a multiphase structure can be identified by the presence of at least two distinct glass transition temperatures.

Accordingly, the heterophasic propylene copolymer (HECO1) according to this invention preferably comprises

(a) the (semi)crystalline propylene polymer (PP1) as the matrix (M1) and
(b) the elastomeric propylene copolymer (E1).

Preferably the weight ratio between the propylene polymer (PP1) and the elastomeric propylene copolymer (E1) [PP1/E1] of the heterophasic propylene copolymer (HECO1) is in the range of 90/10 to 40/60, more preferably in the range of 85/15 to 45/55, yet more preferably in the range of 83/17 to 50/50, like in the range of 75/25 to 60/40.

Preferably, the heterophasic propylene copolymer (HECO1) according to this invention comprises as polymer components only the propylene polymer (PP1) and the elastomeric propylene copolymer (E1). In other words, the heterophasic propylene copolymer (HECO1) may contain further additives but no other polymer in an amount exceeding 5.0 wt.-%, more preferably exceeding 3.0 wt.-%, like exceeding 1.0 wt.-%, based on the total heterophasic propylene copolymer (HECO1). One additional polymer which may be present in such low amounts is a polyethylene which is a reaction by-product obtained by the preparation of the heterophasic propylene copolymer (HECO1). Accordingly, it is in particular appreciated that the instant heterophasic propylene copolymer (HECO1) contains only the propylene polymer (PP1), the elastomeric propylene copolymer (E1) and optionally polyethylene in amounts as mentioned in this paragraph.

The heterophasic propylene copolymer (HECO1) applied according to this invention is featured by a rather low melt flow rate. Accordingly, the heterophasic propylene copolymer (HECO1) has a melt flow rate $MFR_2$ (230°C) in the range of 3.0 to 10.0 g/10 min, preferably in the range of 3.0 to 9.0 g/10 min, more preferably in the range of 4.0 to 8.0 g/10.0 min.

Preferably, it is desired that the heterophasic propylene copolymer (HECO1) is thermo mechanically stable. Accordingly, it is appreciated that the heterophasic propylene copolymer (HECO1) has a melting temperature of at least 162°C, more preferably in the range of 163 to 167°C, still more preferably in the range of 163 to 165°C.

The heterophasic propylene copolymer (HECO1) comprises apart from propylene also comonomers. Preferably the heterophasic propylene copolymer (HECO1) comprises apart from propylene ethylene and/or $C_4$ to $C_8$ $\alpha$-olefins. Accordingly, the term "propylene copolymer" according to this invention is understood as a polypropylene comprising, preferably consisting of, units derivable from

(a) propylene
and

(b) ethylene and/or $C_4$ to $C_8$ $\alpha$-olefins.

Thus, the heterophasic propylene copolymer (HECO1), i.e. propylene polymer (PP1) as well as the elastomeric propylene copolymer (E1), can comprise monomers copolymerizable with propylene, for example comonomers such as ethylene and/or $C_4$ to $C_8$ $\alpha$-olefins, in particular ethylene and/or $C_4$ to $C_8$ $\alpha$-olefins, e.g. 1-butene and/or 1-hexene. Preferably, the heterophasic propylene copolymer (HECO1) according to this invention comprises, especially consists of, monomers copolymerizable with propylene from the group consisting of ethylene, 1-butene and 1-hexene. More specifically, the heterophasic propylene copolymer (HECO1) of this invention comprises - apart from propylene - units derivable from ethylene and/or 1-butene. In a preferred embodiment, the heterophasic propylene copolymer (HECO1) according to this invention comprises units derivable from ethylene and propylene only. Still more preferably the propylene polymer (PP1) as well as the elastomeric propylene copolymer (E1) of the heterophasic propylene copolymer (HECO1) contain the same comonomers, like ethylene.

Additionally, it is appreciated that the heterophasic propylene copolymer (HECO1) preferably has a rather low total comonomer content, preferably ethylene content. Thus, it is preferred that the comonomer content of the heterophasic propylene copolymer (HECO1) is in the range from 4.0 to 40.0 mol-%, preferably in the range from 5.0 to 35mol-%, more preferably in the range from 6.0 to 13.0 mol-%.

The xylene cold soluble (XCS) fraction measured according to according ISO 16152 (25°C) of the heterophasic propylene copolymer (HECO1) is in the range of 10.0 to 30.0 wt.-%, preferably in the range from 15.0 to 30.0 wt.-%, more preferably in the range from 20.0 to 30.0 wt.-%, still more preferably in the range from 23.0 to 30.0 wt.-%.

Further it is appreciated that the xylene cold soluble (XCS) fraction of the heterophasic propylene copolymer (HECO1) is specified by its intrinsic viscosity. A low intrinsic viscosity (IV) value reflects a low weight average molecular weight. For the present invention it is appreciated that the xylene cold soluble fraction (XCS) of the heterophasic propylene copolymer (HECO1) has an intrinsic viscosity (IV) measured according to ISO 1628/1 (at 135°C in decalin) > 3.5 dl/g. More preferably, the xylene cold soluble fraction (XCS) of the heterophasic propylene copolymer (HECO1) has an intrinsic viscosity (IV) in the range of > 3.5 to 9.0 dl/g, preferably in the range of 3.7 to 8.5 dl/g, more preferably in the range of 3.9 to 8.0 dl/g.

Additionally, it is preferred that the comonomer content, i.e. ethylene content, of the xylene cold soluble (XCS) fraction of the heterophasic propylene copolymer (HECO1) is ≤ 45.0 mol-%, preferably ≤ 40.0 mol-%, more preferably ≤ 39.0 mol.-%, and most preferably ≤ 35.0 mol.-%. For example, the heterophasic propylene copolymer (HECO1) has a comonomer content of the xylene cold soluble (XCS) fraction between 5.0 and 40.0 mol.-%, preferably between 20.0 and 39.0 mol.-%, more preferably between 23.0 and 37.0 mol.-%, and most preferably between 25.0 and 35.0 mol.-%. The comonomers present in the xylene cold soluble (XCS) fraction are those defined above for the propylene polymer (M1) and the elastomeric propylene copolymer (E1), respectively. In one preferred embodiment the comonomer is ethylene only.

The heterophasic propylene copolymer (HECO1) can be further defined by its individual components, i.e. the propylene polymer (PP1) and the elastomeric propylene copolymer (E1).

The propylene polymer (PP1) can be a propylene copolymer or a propylene homopolymer, the latter being preferred.

In case the propylene polymer (PP1) is a propylene copolymer, the propylene polymer (PP1) comprises monomers copolymerizable with propylene, for example comonomers such as ethylene and/or $C_4$ to $C_8$ $\alpha$-olefins, in particular ethylene and/or $C_4$ to $C_6$ $\alpha$-olefins, e.g. 1-butene and/or 1-hexene. Preferably the propylene polymer (PP1) according to this invention comprises, especially consists of, monomers copolymerizable with propylene from the group consisting of ethylene, 1-butene and 1-hexene. More specifically the propylene polymer (PP1) of this invention comprises - apart from propylene - units derivable from ethylene and/or 1-butene. In a preferred embodiment the propylene polymer (PP1) comprises units derivable from ethylene and propylene only.

The propylene polymer (PP1) according to this invention has a melt flow rate $MFR_2$ (230°C/2.16 kg) measured according to ISO 1133 in the range of 50 to 200 g/10 min, more preferably in the range of 50 to 180 g/10 min, still more preferably in the range of 50 to 120 g/10 min.

As mentioned above the heterophasic propylene copolymer (HECO1) is featured by a low comonomer content. Accordingly, the comonomer content of the propylene polymer (PP1) is in the range of 0.0 to 5.0 mol-%, yet more preferably in the range of 0.0 to 3.0 mol-%, still more preferably in the range of 0.0 to 1.0 mol-%. It is especially preferred that the propylene polymer (PP1) is a propylene homopolymer.

The propylene polymer (PP1) preferably comprises at least two polymer fractions, like two or three polymer fractions, all of them are propylene homopolymers. Even more preferred the propylene polymer (PP1) comprises, preferably consists of, a first propylene homopolymer fraction (H-PP1a) and a second propylene homopolymer fraction (H-PP1b).

Preferably, the first propylene homopolymer fraction (H-PP1a) and the second propylene homopolymer fraction (H-PP1b) differ in melt flow rate.

Accordingly, one of the propylene homopolymer fractions (H-PP1a) and (H-PP1b) of the propylene polymer (PP1) is the low melt flow rate $MFR_2$ (230°C / 2.16 kg) fraction and the other fraction is the high melt flow rate $MFR_2$ (230°C / 2.16 kg) fraction, wherein further the low flow fraction and the high flow fraction fulfil in equation (I), more preferably in equation (Ia), still more preferably in equation (Ib),

$$\frac{MFR(high)}{MFR(low)} \geq 2.0 \qquad (I),$$

$$8.0 \geq \frac{MFR(high)}{MFR(low)} \geq 2.5 \qquad (Ia),$$

$$5.0 \geq \frac{MFR(high)}{MFR(low)} \geq 3.5 \qquad (Ib),$$

wherein MFR (high) is the melt flow rate $MFR_2$ (230°C / 2.16 kg) [g/10 min] of the propylene homopolymer fraction with the higher melt flow rate $MFR_2$ (230°C / 2.16 kg) and MFR (low) is the melt flow rate $MFR_2$ (230°C / 2.16 kg) [g/10 min] of the

propylene homopolymer fraction with the lower melt flow rate $MFR_2$ (230°C / 2.16 kg).

Preferably, the first propylene copolymer fraction (H-PP1a) is the random copolymer fraction with the higher melt flow rate $MFR_2$ (230°C / 2.16 kg) and the second propylene copolymer fraction (H-PP1b) is the random copolymer fraction with the lower melt flow rate $MFR_2$ (230°C / 2.16 kg).

Accordingly, it is preferred that the first propylene homopolymer fraction (H-PP1a) has a melt flow rate $MFR_2$ (230°C / 2.16 kg) in the range of 90 to 160 g/10 min, more preferably in the range of 100 to 150 g/10 min, still more preferably in the range of 120 to 140 g/10 min and/or that the second propylene homopolymer fraction (H-PP1b) has a melt flow rate $MFR_2$ (230°C / 2.16 kg) in the range of 10 to 39 g/10 min, more preferably in the range of 17 to 32 g/10 min, still more preferably in the range of 22 to 27 g/10 min.

Further, the weight ratio between the first propylene homopolymer fraction (H-PP1a) and second propylene homopolymer fraction (H-PP1b) preferably is 20:80 to 80:20, more preferably 75:25 to 25:75, still more preferably 55:45 to 45:55.

The heterophasic propylene copolymer (HECO1) preferably comprises 60 to 95 wt.-%, more preferably 70 to 90 wt.-%, still more preferably 72 to 87 wt.-% of the propylene polymer (PP1), based on the total weight of the heterophasic propylene copolymer (HECO1).

Additionally, the heterophasic propylene copolymer (HECO1) preferably comprises 5 to 40 wt.-%, more preferably 10 to 30 wt.-%, still more preferably 13 to 28 wt.-% of the elastomeric propylene copolymer (E1), based on the total weight of the heterophasic propylene copolymer (HECO1).

Thus, it is appreciated that the heterophasic propylene copolymer (HECO1) preferably comprises, more preferably consists of, 60 to 95 wt.-%, more preferably 70 to 90 wt.-%, still more preferably 72 to 87 wt.-% of the propylene polymer (PP1) and 5 to 40 wt.-%, more preferably 10 to 30 wt.-%, still more preferably 13 to 28 wt.-% of the elastomeric propylene copolymer (E1), based on the total weight of the heterophasic propylene copolymer (HECO1).

Accordingly, a further component of the heterophasic propylene copolymer (HECO1) is the elastomeric propylene copolymer (E1) dispersed in the matrix (M1) being the propylene polymer (PP1). Concerning the comonomers used in the elastomeric propylene copolymer (E1) it is referred to the information provided for the first heterophasic propylene copolymer (HECO1). Accordingly, the elastomeric propylene copolymer (E1) comprises monomers copolymerizable with propylene, for example comonomers such as ethylene and/or $C_4$ to $C_8$ $\alpha$-olefins, in particular ethylene and/or $C_4$ to $C_6$ $\alpha$-olefins, e.g. 1-butene and/or 1-hexene.

Preferably, the elastomeric propylene copolymer (E1) comprises, especially consists of, monomers copolymerizable with propylene from the group consisting of ethylene, 1-butene and 1-hexene. More specifically, the elastomeric propylene copolymer (E1) comprises - apart from propylene - units derivable from ethylene and/or 1-butene. Thus, in an especially preferred embodiment the elastomeric propylene copolymer (E1) comprises units derivable from ethylene and propylene only.

The comonomer content of the elastomeric propylene copolymer (E1) preferably is in the range of 15.0 to 55.0 mol-%, more preferably in the range of 20.0 to 50.0 mol-%, still more preferably in the range of 25.0 to 40.0 mol-%.

The heterophasic propylene copolymer (HECO1) as defined in the instant invention may contain up to 5.0 wt.-% additives, like nucleating agents and antioxidants, as well as slip agents and antiblocking agents. Preferably the additive content (without $\alpha$-nucleating agents) is below 3.0 wt.-%, like below 1.0 wt.-%.

According to a preferred embodiment of the present invention, the heterophasic propylene copolymer (HECO1) contains an $\alpha$-nucleating agent.

According to this invention the alpha nucleating agent is not an additive (AD).

The alpha-nucleating agent is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4,6-di-tert-butylphenyl) phosphate or aluminum-hydroxy-bis[2,2'-methylene-bis(4,6-di-t-butylphenyl)phosphate], and
(iv) vinylcycloalkane polymer or vinylalkane polymer, and
(v) mixtures thereof.

Preferably the alpha-nucleating agent comprised in the composition of the invention is vinylcycloalkane polymer and/or vinylalkane polymer, more preferably vinylcycloalkane polymer, like vinylcyclohexane (VCH) polymer. Vinyl cyclohexane (VCH) polymer is particularly preferred as $\alpha$-nucleating agent. It is appreciated that the amount of vinylcycloalkane, like vinylcyclohexane (VCH), polymer and/or vinylalkane polymer, more preferably of vinylcyclohexane (VCH) polymer, in the composition is not more than 500 ppm, preferably not more than 200 ppm, more preferably not more

than 100 ppm, like in the range of 0.1 to 500 ppm, preferably in the range of 0.5 to 200 ppm, more preferably in the range of 1 to 100 ppm. Furthermore, it is appreciated that the vinylcycloalkane polymer and/or vinylalkane polymer is introduced into the composition by the BNT technology. With regard to the BNT-technology reference is made to the international applications WO 99/24478, WO 99/24479 and particularly WO 00/68315. According to this technology a catalyst system, preferably a Ziegler-Natta procatalyst, can be modified by polymerizing a vinyl compound in the presence of the catalyst system, comprising in particular the special Ziegler-Natta procatalyst, an external donor and a cocatalyst, which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is preferably used for the preparation of the heterophasic composition (HECO) present in the modified polypropylene composition (mPP). The polymerized vinyl compound acts as an alpha-nucleating agent. The weight ratio of vinyl compound to solid catalyst component in the modification step of the catalyst is preferably of up to 5 (5:1), more preferably up to 3 (3:1), like in the range of 0.5 (1:2) to 2 (2:1).

Such nucleating agents are commercially available and are described, for example, in "Plastic Additives Handbook", 5th edition, 2001 of Hans Zweifel (pages 967 to 990).

The heterophasic propylene copolymer (HECO1) can be produced by blending the propylene polymer (PP1) and the elastomeric propylene copolymer (E1). However, it is preferred that the heterophasic propylene copolymer (HECO1) is produced in a sequential step process, using reactors in serial configuration and operating at different reaction conditions. As a consequence, each fraction prepared in a specific reactor may have its own molecular weight distribution and/or comonomer content distribution.

Accordingly, it is preferred that the heterophasic propylene copolymer (HECO1) is produced in a sequential polymerization process comprising the steps of

(a) polymerizing propylene and optionally at least one ethylene and/or $C_4$ to $C_{12}$ $\alpha$-olefin in a first reactor (R1) obtaining the first polypropylene fraction of the propylene polymer (PP1), preferably said first polypropylene fraction is a propylene homopolymer,
(b) transferring the first polypropylene fraction into a second reactor (R2),
(c) polymerizing in the second reactor (R2) and in the presence of said first polypropylene fraction propylene and optionally at least one ethylene and/or $C_4$ to $C_{12}$ $\alpha$-olefin obtaining thereby the second polypropylene fraction, preferably said second polypropylene fraction is a second propylene homopolymer, said first polypropylene fraction and said second polypropylene fraction form the propylene polymer (PP1), i.e. the matrix of the heterophasic propylene copolymer (HECO1),
(d) transferring the propylene polymer (PP1) of step (c) into a third reactor (R3),
(e) polymerizing in the third reactor (R3) and in the presence of the propylene polymer (PP1) obtained in step (c) propylene and ethylene to obtain the first propylene copolymer fraction of the elastomeric propylene copolymer (E1) dispersed in the propylene polymer (PP1),
(f) transferring the propylene polymer (PP1) and the first propylene copolymer fraction of the elastomeric propylene copolymer (E1) into a fourth reactor (R4),
(g) polymerizing in the fourth reactor (R4) and in the presence of the propylene polymer (PP1) and the first propylene copolymer fraction of the elastomeric propylene copolymer (E1) propylene and ethylene to obtain the second propylene copolymer fraction of the elastomeric propylene copolymer (E1) dispersed in the propylene polymer (PP1), the propylene polymer (PP1) and the elastomeric propylene copolymer (E1) form the heterophasic propylene copolymer (HECO1).

Of course, in the first reactor (R1) the second polypropylene fraction can be produced and in the second reactor (R2) the first polypropylene fraction can be obtained. The same holds true for the elastomeric propylene copolymer phase.

Preferably between the second reactor (R2) and the third reactor (R3) the monomers are flashed out.

The term "sequential polymerization process" indicates that the heterophasic propylene copolymer (HECO1) is produced in at least two, like three or four reactors connected in series. Accordingly, the present process comprises at least a first reactor (R1) and a second reactor (R2), more preferably a first reactor (R1), a second reactor (R2), a third reactor (R3) and a fourth reactor (R4). The term "polymerization reactor" shall indicate that the main polymerization takes place. Thus in case the process consists of four polymerization reactors, this definition does not exclude the option that the overall process comprises for instance a pre-polymerization step in a pre-polymerization reactor. The term "consist of" is only a closing formulation in view of the main polymerization reactors.

The first reactor (R1) is preferably a slurry reactor (SR) and can be any continuous or simple stirred batch tank

reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2) can be a slurry reactor, like a loop reactor, as the first reactor or alternatively a gas phase reactor (GPR).

The third reactor (R3) and the fourth reactor (R4) are preferably gas phase reactors (GPR).

Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like a loop reactor (LR), whereas the second reactor (R2), the third reactor (R3) and the fourth reactor (R4) are gas phase reactors (GPR). Accordingly for the instant process at least four, preferably four polymerization reactors, namely a slurry reactor (SR), like a loop reactor (LR), a first gas phase reactor (GPR-1), a second gas phase reactor (GPR-2) and a third gas phase reactor (GPR-3) connected in series are used. If needed prior to the slurry reactor (SR) a pre-polymerization reactor is placed.

In another preferred embodiment the first reactor (R1) and second reactor (R2) are slurry reactors (SR), like a loop reactors (LR), whereas the third reactor (R3) and the fourth reactor (R4) are gas phase reactors (GPR). Accordingly for the instant process at least three, preferably three polymerization reactors, namely two slurry reactors (SR), like two loop reactors (LR), and two gas phase reactors (GPR-1) and (GPR-2) connected in series are used. If needed prior to the first slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic propylene copolymer (HECO1) as defined above the conditions for the first reactor (R1), i.e. the slurry reactor (SR), like a loop reactor (LR), of step (a) may be as follows:

- the temperature is within the range of 50°C to 110°C, preferably between 60°C and 100°C, more preferably between 68 and 95°C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50°C to 130°C, preferably between 60°C and 100°C,
- the pressure is within the range of 5 bar to 50 bar, preferably between 15 bar to 35 bar,
- hydrogen can be added for controlling the molar mass in a manner known per se.

The residence time can vary in the three reactor zones.

In one embodiment of the process for producing the polypropylene the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

Subsequently, the reaction mixture from step (c) is transferred into the third reactor (R3), i.e. gas phase reactor (GPR-2) and, optionally, into a fourth reactor (R4), i.e. gas phase reactor (GPR-3). The conditions and residence times in reactors (R3) and/or (R4) are preferably identical with the conditions and residence times in reactor (R2) as outlined in the previous paragraphs.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60°C, preferably from 15 to 50°C, and more preferably from 20 to 45°C.

The pressure in the prepolymerization reactor is not critical but must be sufficiently high to maintain the reaction

mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the heterophasic propylene copolymer (HECO1) is obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention for preparing the heterophasic composition (HECO1) is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

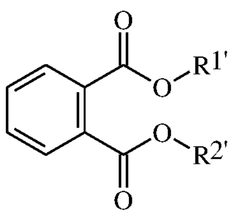
(I)

wherein $R^{1'}$ and $R^{2'}$ are independently at least a $C_5$ alkyl
under conditions where a transesterification between said $C_1$ to $C_2$ alcohol and said dialkylphthalate of formula (I) takes place to form the internal donor

c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanized carrier, followed by the steps of

- adding to said titanised carrier

  (i) a dialkylphthalate of formula (I) with $R^{1'}$ and $R^{2'}$ being independently at least a Cs-alkyl, like at least a $C_8$-alkyl, or preferably
  (ii) a dialkylphthalate of formula (I) with $R^{1'}$ and $R^{2'}$ being the same and being at least a Cs-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

  to form a first product,
- subjecting said first product to suitable transesterification conditions, i.e. to a temperature above 100°C, preferably between 100 to 150°C, more preferably between 130 to 150°C, such that said methanol or ethanol is transesterified with said ester groups of said dialkylphthalate of formula (I) to form preferably at least 80 mol-%, more preferably 90

mol-%, most preferably 95 mol.-%, of a dialkylphthalate of formula (II)

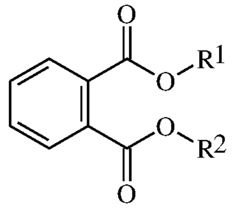

(II)

with $R^1$ and $R^2$ being methyl or ethyl, preferably ethyl,
the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.
This crystallized adduct is preferably used as the catalyst carrier and reacted to the procatalyst useful in the present invention as described in WO 92/19658 and WO 92/19653.
As the catalyst residue is removed by extracting, an adduct of the titanised carrier and the internal donor is obtained, in which the group deriving from the ester alcohol has changed.
**In** case sufficient titanium remains on the carrier, it will act as an active element of the procatalyst.
Otherwise the titanization is repeated after the above treatment in order to ensure a sufficient titanium concentration and thus activity.
Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.
More preferably the procatalyst used according to the invention has been produced by using ethanol as the alcohol and dioctylphthalate (DOP) as dialkylphthalate of formula (I), yielding diethyl phthalate (DEP) as the internal donor compound.
Still more preferably the catalyst used according to the invention is the catalyst as described in the example section; especially with the use of dioctylphthalate as dialkylphthalate of formula (I).
For the production of the heterophasic composition (HECO1) according to the invention the catalyst system used preferably comprises in addition to the special Ziegler-Natta procatalyst an organometallic cocatalyst as component (ii).
Accordingly it is preferred to select the cocatalyst from the group consisting of trialkylaluminum, like triethylaluminum (TEA), dialkyl aluminum chloride and alkyl aluminum sesquichloride.
Component (iii) of the catalysts system used is an external donor represented by formula (IIIa) or (IIIb). Formula (IIIa) is defined by

$$Si(OCH_3)_2R_2^5 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.
It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.
Formula (IIIb) is defined by

$$Si(OCH_2CH_3)_3(NR^xR^y) \qquad (IIIb)$$

wherein $R^x$ and $R^y$ can be the same or different a represent a hydrocarbon group having 1 to 12 carbon atoms.
$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.
More preferably both $R^x$ and $R^y$ are the same, yet more preferably both $R^x$ and $R^y$ are an ethyl group.
More preferably the external donor is of formula (IIIa), like dicyclopentyl dimethoxy silane [$Si(OCH_3)_2$(cyclo-

pentyl)$_2$], diisopropyl dimethoxy silane [$Si(OCH_3)_2(CH(CH_3)_2)_2$].

Most preferably the external donor is dicyclopentyl dimethoxy silane [$Si(OCH_3)_2$(cyclopentyl)$_2$] (donor D).

In a further embodiment, the Ziegler-Natta procatalyst can be modified by polymerising a vinyl compound in the presence of the catalyst system, comprising the special Ziegler-Natta procatalyst (component (i)), an external donor (component (iii) and optionally a cocatalyst (component (iii)), which vinyl compound has the formula:

$$CH_2{=}CH\text{-}CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the heterophasic composition (HECO) according to this invention. The polymerized vinyl compound can act as an $\alpha$-nucleating agent.

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

## The propylene homopolymer (H-PP)

It is appreciated that foamable polypropylene composition (C) optionally comprises a propylene homopolymer (H-PP).

The expression propylene homopolymer used in the instant invention relates to a polypropylene that consists substantially, i.e. of at least 99.5 wt.-%, based on the total weight of the polypropylene, preferably of at least 99.6 wt.-%, more preferably of at least 99.8 wt.-%, of propylene units. In one embodiment of the present invention, only propylene units in the propylene homopolymer are detectable.

The propylene homopolymer (H-PP) is preferably a semicrystalline propylene homopolymer (H-PP).

The propylene homopolymer (H-PP), preferably the semicrystalline propylene homopolymer (H-PP), has preferably a melting temperature Tm in the range of 158 to 168°C, like in the range of 160 to 166°C.

Additionally or alternatively, it is preferred that the propylene homopolymer (H-PP), preferably the semicrystalline propylene homopolymer (H-PP), has a melt flow rate $MFR_2$ (230°C) measured according to ISO 1133 in the range of 40.0 to 120 g/10min, more preferably in the range of 50.0 to 100.0 g/10min, still more preferably in the range of 55.0 to 95.0 g/10min, yet more preferably in the range of 60.0 to 90.0 g/10min, still yet more preferably in the range of 60.0 to 90.0 g/10min, like in the range of 65.0 to 85.0 g/10min.

For example, the semicrystalline propylene homopolymer (H-PP), has a melting temperature Tm in the range of 158 to 168°C, like in the range of 160 to 166°C or a melt flow rate $MFR_2$ (230°C) measured according to ISO 1133 in the range of 40.0 to 120 g/10min, more preferably in the range of 50.0 to 100.0 g/10min, still more preferably in the range of 55.0 to 95.0 g/10min, yet more preferably in the range of 60.0 to 90.0 g/10min, still yet more preferably in the range of 60.0 to 90.0 g/10min, like in the range of 65.0 to 85.0 g/10min.

Preferably, the semicrystalline propylene homopolymer (H-PP), has a melting temperature Tm in the range of 158 to 168°C, like in the range of 160 to 166°C and a melt flow rate $MFR_2$ (230°C) measured according to ISO 1133 in the range of 40.0 to 120 g/10min, more preferably in the range of 50.0 to 100.0 g/10min, still more preferably in the range of 55.0 to 95.0 g/10min, yet more preferably in the range of 60.0 to 90.0 g/10min, still yet more preferably in the range of 60.0 to 90.0 g/10min, like in the range of 65.0 to 85.0 g/10min.

Such a propylene homopolymer (H-PP), preferably semicrystalline propylene homopolymer (H-PP), is known in the art. For instance the semicrystalline propylene homopolymer (H-PP) can be the commercial product HJ120UB of Borealis AG.

## The inorganic filler (F)

An optional component of the foamable polypropylene composition (C) according to this invention is the presence of an inorganic filler (F).

Preferably the inorganic filler (F) is a mineral filler. It is appreciated that the inorganic filler (F) is preferably a phyllosilicate, mica, wollastonite or carbon black. Even more preferred the inorganic filler (F) is selected from the group consisting of mica, wollastonite, kaolinite, smectite, montmorillonite, talc and carbon black.

The most preferred inorganic fillers (F) are talc and/or carbon black. It is especially preferred that the inorganic filler (F) is talc.

In one embodiment, the inorganic filler (F) is talc and carbon black.

It is appreciated that the filler (F) has median particle size ($D_{50}$) in the range of 0.8 to 20 $\mu$m and a top cut particle size ($D_{95}$) in the range of 10 to 20 $\mu$m, preferably a median particle size ($D_{50}$) in the range of 5.0 to 8.0 $\mu$m and top cut particle size ($D_{95}$) in the range of 12 to 17 $\mu$m, more preferably a median particle size ($D_{50}$) in the range of 5.5 to 7.8 $\mu$m and

top cut particle size ($D_{95}$) of 13 to 16.5 μm.

According to this invention the filler (F) does not belong to the class of alpha nucleating agents and additives (AD).

The inorganic filler (F) is state of the art and a commercially available product.

The foaming agent (FA)

It is one requirement of the present invention that the foamable polypropylene composition (C) according to this invention comprises at least one foaming agent (FA) being selected from chemical and physical foaming agents.

The term "foaming agent" refers to an agent which is capable of producing a cellular structure in a polypropylene composition during foaming.

It is appreciated that the expression "at least one" foaming agent (FA) means that the foaming agent (FA) comprises, preferably consists of, one or more kinds of foaming agent(s).

Accordingly, it should be noted that the at least one foaming agent (FA) may comprise one kind of foaming agent (FA). Alternatively, the at least one foaming agent (FA) may comprise a mixture of two or more kinds of foaming agents. For example, the at least one foaming agent (FA) may comprise a mixture of two or three kinds of foaming agents, like two kinds of foaming agents.

In one embodiment of the present invention, the at least one foaming agent (FA) comprises, preferably consists of, two kinds of foaming agents.

Chemical foaming agents include e.g. azodicarbonamide, diazoaminobenzene, azo-bis-isobutyro-nitrile and analogs thereof, citric acid, ammonium carbonate, bicarbonates such as sodium hydrogen carbonate (or sodium bicarbonate) and the like. Physical foaming agents include e.g. nitrogen, carbon dioxide and other inert gases.

Preferably, the at least one foaming agent (FA) is/are (a) chemical foaming agent(s). More preferably, the at least one foaming agent (FA) comprises, preferably consists of, two kinds of chemical foaming agents.

For example, the at least one foaming agent (FA) is a mixture of citric acid and bicarbonate, such as sodium hydrogen carbonate (or sodium bicarbonate).

Alternatively, the at least one foaming agent (FA) is a bicarbonate, preferably sodium hydrogen carbonate (or sodium bicarbonate).

The heterophasic propylene copolymer (HECO2)

According to one embodiment of the present invention, the foamable polypropylene composition (C) further comprises a heterophasic propylene copolymer (HECO2) which is different from the heterophasic propylene copolymer (HECO1).

The heterophasic propylene copolymer (HECO2) according to this invention comprises a matrix (M2) being the propylene polymer (PP2) and dispersed therein an elastomeric propylene copolymer being the elastomeric propylene copolymer (E2). Thus the matrix (M2) contains (finely) dispersed inclusions being not part of the matrix (M2) and said inclusions contain the elastomeric propylene copolymer (E2). Regarding the term "inclusions", reference is made to the definition provided above.

Accordingly, the heterophasic propylene copolymer (HECO2) according to this invention preferably comprises

(a) the (semi)crystalline propylene polymer (PP2) as the matrix (M2) and
(b) the elastomeric propylene copolymer (E2).

Preferably the weight ratio between the propylene polymer (PP2) and the elastomeric propylene copolymer (E2) [PP2/E2] of the heterophasic propylene copolymer (HECO2) is in the range of 90/10 to 40/60, more preferably in the range of 85/15 to 45/55, yet more preferably in the range of 83/17 to 50/50, like in the range of 82/18 to 60/40.

Preferably, the heterophasic propylene copolymer (HECO2) according to this invention comprises as polymer components only the propylene polymer (PP2) and the elastomeric propylene copolymer (E2). In other words, the heterophasic propylene copolymer (HECO2) may contain further additives but no other polymer in an amount exceeding 5.0 wt.-%, more preferably exceeding 3.0 wt.-%, like exceeding 1.0 wt.-%, based on the total heterophasic propylene copolymer (HECO2). One additional polymer which may be present in such low amounts is a polyethylene which is a reaction by-product obtained by the preparation of the heterophasic propylene copolymer (HECO2). Accordingly, it is in particular appreciated that the instant heterophasic propylene copolymer (HECO2) contains only the propylene polymer (PP2), the elastomeric propylene copolymer (E2) and optionally polyethylene in amounts as mentioned in this paragraph.

The heterophasic propylene copolymer (HECO2) applied according to this invention is featured by a rather high melt flow rate. Accordingly, the heterophasic propylene copolymer (HECO2) has a melt flow rate $MFR_2$ (230°C) in the range of 50 to 120 g/10 min, preferably in the range of 60 to 110 g/10 min, more preferably in the range of 65 to 91 g/10 min.

Preferably, it is desired that the heterophasic propylene copolymer (HECO2) is thermo mechanically stable.

Accordingly, it is appreciated that the heterophasic propylene copolymer (HECO2) has a melting temperature of at least 160°C, more preferably in the range of 160 to 167°C, still more preferably in the range of 162 to 165°C.

The heterophasic propylene copolymer (HECO2) comprises apart from propylene also comonomers. Preferably the heterophasic propylene copolymer (HECO2) comprises apart from propylene ethylene and/or $C_4$ to $C_8$ $\alpha$-olefins. Accordingly, the term "propylene copolymer" according to this invention is understood as a polypropylene comprising, preferably consisting of, units derivable from

(a) propylene
and

(b) ethylene and/or $C_4$ to $C_8$ $\alpha$-olefins.

Thus, the heterophasic propylene copolymer (HECO2), i.e. the propylene polymer (PP2) as well as the elastomeric propylene copolymer (E2), can comprise monomers copolymerizable with propylene, for example comonomers such as ethylene and/or $C_4$ to $C_8$ $\alpha$-olefins, in particular ethylene and/or $C_4$ to $C_8$ $\alpha$-olefins, e.g. 1-butene and/or 1-hexene. Preferably, the heterophasic propylene copolymer (HECO2) according to this invention comprises, especially consists of, monomers copolymerizable with propylene from the group consisting of ethylene, 1-butene and 1-hexene. More specifically, the heterophasic propylene copolymer (HECO2) of this invention comprises - apart from propylene - units derivable from ethylene and/or 1-butene. In a preferred embodiment, the heterophasic propylene copolymer (HECO2) according to this invention comprises units derivable from ethylene and propylene only. Still more preferably the propylene polymer (PP2) as well as the elastomeric propylene copolymer (E2) of the heterophasic propylene copolymer (HECO2) contain the same comonomers, like ethylene.

Additionally, it is appreciated that the heterophasic propylene copolymer (HECO2) preferably has a rather low total comonomer content, preferably ethylene content. Thus, it is preferred that the comonomer content of the heterophasic propylene copolymer (HECO2) is in the range from 4.0 to 30.0 mol-%, preferably in the range from 6.0 to 18.0 mol-%, more preferably in the range from 7.0 to 13.0 mol-%.

The xylene cold soluble (XCS) fraction measured according to according ISO 16152 (25°C) of the heterophasic propylene copolymer (HECO2) is in the range of 12.0 to 35.0 wt.-%, preferably in the range from 12.0 to 30.0 wt.-%, more preferably in the range from 12.0 to 25.0 wt.-%, still more preferably in the range from 12.0 to 22.0 wt.-%.

Further it is appreciated that the xylene cold soluble (XCS) fraction of the heterophasic propylene copolymer (HECO2) is specified by its intrinsic viscosity. A low intrinsic viscosity (IV) value reflects a low weight average molecular weight. For the present invention it is appreciated that the xylene cold soluble fraction (XCS) of the heterophasic propylene copolymer (HECO2) has an intrinsic viscosity (IV) measured according to ISO 1628/1 (at 135°C in decalin) of < 3.5 dl/g, preferably in the range of 1.0 to 3.3 dl/g, more preferably in the range of 1.5 to 3.2 dl/g, and most preferably in the range of 1.7 to 3.0 dl/g.

Additionally, it is preferred that the comonomer content, i.e. ethylene content, of the xylene cold soluble (XCS) fraction of the heterophasic propylene copolymer (HECO2) is from 35.0 to 65.0 mol-%. The comonomers present in the xylene cold soluble (XCS) fraction are those defined above for the propylene polymer (PP2) and the elastomeric propylene copolymer (E2), respectively. In one preferred embodiment the comonomer is ethylene only.

The heterophasic propylene copolymer (HECO2) can be further defined by its individual components, i.e. the propylene polymer (PP2) and the elastomeric propylene copolymer (E2).

The propylene polymer (PP2) can be a propylene copolymer or a propylene homopolymer, the latter being preferred.

In case the propylene polymer (PP2) is a propylene copolymer, the propylene polymer (PP2) comprises monomers copolymerizable with propylene, for example comonomers such as ethylene and/or $C_4$ to $C_8$ $\alpha$-olefins, in particular ethylene and/or $C_4$ to $C_6$ $\alpha$-olefins, e.g. 1-butene and/or 1-hexene. Preferably the propylene polymer (PP2) according to this invention comprises, especially consists of, monomers copolymerizable with propylene from the group consisting of ethylene, 1-butene and 1-hexene. More specifically the propylene polymer (PP2) of this invention comprises - apart from propylene - units derivable from ethylene and/or 1-butene. In a preferred embodiment the propylene polymer (PP2) comprises units derivable from ethylene and propylene only.

The propylene polymer (PP2) according to this invention has a melt flow rate $MFR_2$ (230°C/2.16 kg) measured according to ISO 1133 in the range of 50 to 200 g/10 min, more preferably in the range of 110 to 190 g/10 min, still more preferably in the range of 140 to 170 g/10 min.

As mentioned above the heterophasic propylene copolymer (HECO2) is featured by a low comonomer content. Accordingly, the comonomer content of the propylene polymer (PP2) is in the range of 0.0 to 5.0 mol-%, yet more preferably in the range of 0.0 to 3.0 mol-%, still more preferably in the range of 0.0 to 1.0 mol-%. It is especially preferred that the propylene polymer (PP2) is a propylene homopolymer.

The heterophasic propylene copolymer (HECO2) preferably comprises 60 to 95 wt.-%, more preferably 60 to 90

wt.-%, still more preferably 65 to 87 wt.-% of the propylene polymer (PP2), based on the total weight of the heterophasic propylene copolymer (HECO2).

Additionally, the heterophasic propylene copolymer (HECO2) preferably comprises 5 to 40 wt.-%, more preferably 10 to 40 wt.-%, still more preferably 13 to 35 wt.-% of the elastomeric propylene copolymer (E2), based on the total weight of the heterophasic propylene copolymer (HECO2).

Thus, it is appreciated that the heterophasic propylene copolymer (HECO2) preferably comprises, more preferably consists of, 60 to 95 wt.-%, preferably 60 to 90 wt.-%, more preferably 65.0 to 87.0 wt.-% of the propylene polymer (PP2) and 5 to 40 wt.-%, preferably 10 to 40 wt.-%, more preferably 13.0 to 35.0 wt.-% of the elastomeric propylene copolymer (E2), based on the total weight of the heterophasic propylene copolymer (HECO2).

Accordingly, a further component of the heterophasic propylene copolymer (HECO2) is the elastomeric propylene copolymer (E2) dispersed in the matrix (M2) being the propylene polymer (PP2). Concerning the comonomers used in the elastomeric propylene copolymer (E2) it is referred to the information provided for the heterophasic propylene copolymer (HECO2). Accordingly, the elastomeric propylene copolymer (E2) comprises monomers copolymerizable with propylene, for example comonomers such as ethylene and/or $C_4$ to $C_8$ $\alpha$-olefins, in particular ethylene and/or $C_4$ to $C_6$ $\alpha$-olefins, e.g. 1-butene and/or 1-hexene. Preferably, the elastomeric propylene copolymer (E2) comprises, especially consists of, monomers copolymerizable with propylene from the group consisting of ethylene, 1-butene and 1-hexene. More specifically, the elastomeric propylene copolymer (E2) comprises - apart from propylene - units derivable from ethylene and/or 1-butene. Thus, in an especially preferred embodiment the elastomeric propylene copolymer (E2) comprises units derivable from ethylene and propylene only.

The comonomer content of the elastomeric propylene copolymer (E2) preferably is in the range of 35.0 to 70.0 mol-%, more preferably in the range of 37.0 to 60.0 mol-%, still more preferably in the range of 40.0 to 50.0 mol-%.

The heterophasic propylene copolymer (HECO2) as defined in the instant invention may contain up to 5.0 wt.-% additives, like nucleating agents and antioxidants, as well as slip agents and antiblocking agents. Preferably the additive content (without $\alpha$-nucleating agents) is below 3.0 wt.-%, like below 1.0 wt.-%.

According to a preferred embodiment of the present invention, the heterophasic propylene copolymer (HECO2) contains an $\alpha$-nucleating agent.

According to this invention the alpha nucleating agent is not an additive (AD).

The alpha-nucleating agent is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4,6-di-tert-butylphenyl) phosphate or aluminum-hydroxy-bis[2,2'-methylene-bis(4,6-di-t-butylphenyl)phosphate], and
(iv) vinylcycloalkane polymer or vinylalkane polymer, and
(v) mixtures thereof.

Preferably the alpha-nucleating agent comprised in the composition of the invention is vinylcycloalkane polymer and/or vinylalkane polymer, more preferably vinylcycloalkane polymer, like vinylcyclohexane (VCH) polymer. Vinyl cyclohexane (VCH) polymer is particularly preferred as $\alpha$-nucleating agent. It is appreciated that the amount of vinylcycloalkane, like vinylcyclohexane (VCH), polymer and/or vinylalkane polymer, more preferably of vinylcyclohexane (VCH) polymer, in the composition is not more than 500 ppm, preferably not more than 200 ppm, more preferably not more than 100 ppm, like in the range of 0.1 to 500 ppm, preferably in the range of 0.5 to 200 ppm, more preferably in the range of 1 to 100 ppm. Furthermore, it is appreciated that the vinylcycloalkane polymer and/or vinylalkane polymer is introduced into the composition by the BNT technology. With regard to the BNT-technology reference is made to the international applications WO 99/24478, WO 99/24479 and particularly WO 00/68315. According to this technology a catalyst system, preferably a Ziegler-Natta procatalyst, can be modified by polymerizing a vinyl compound in the presence of the catalyst system, comprising in particular the special Ziegler-Natta procatalyst, an external donor and a cocatalyst, which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is preferably used for the preparation of the heterophasic compostion (HECO) present in the modified polypropylene composition (mPP). The polymerized vinyl compound acts as an alpha-nucleating agent. The weight ratio of vinyl compound to solid catalyst component in the

modification step of the catalyst is preferably of up to 5 (5:1), more preferably up to 3 (3:1), like in the range of 0.5 (1:2) to 2 (2:1).

Such nucleating agents are commercially available and are described, for example, in "Plastic Additives Handbook", 5th edition, 2001 of Hans Zweifel (pages 967 to 990).

The heterophasic propylene copolymer (HECO2) can be produced by blending the propylene polymer (PP2) and the elastomeric propylene copolymer (E2). However, it is preferred that the heterophasic propylene copolymer (HECO2) is produced in a sequential step process, using reactors in serial configuration and operating at different reaction conditions. As a consequence, each fraction prepared in a specific reactor may have its own molecular weight distribution and/or comonomer content distribution.

The heterophasic propylene copolymer (HECO2) according to this invention is preferably produced in a sequential polymerization process, i.e. in a multistage process, known in the art, wherein the propylene polymer (PP2) is produced at least in one slurry reactor, preferably in a slurry reactor and optionally in a subsequent gas phase reactor, and subsequently the elastomeric propylene copolymer (E2) is produced at least in one, i.e. one or two, gas phase reactor(s).

Accordingly it is preferred that the heterophasic propylene copolymer (HECO2) is produced in a sequential polymerization process comprising the steps of

(a) polymerizing propylene and optionally at least one ethylene and/or $C_4$ to $C_{12}$ $\alpha$-olefin in a first reactor (R1) obtaining the first polypropylene fraction of the propylene polymer (PP2), preferably said first polypropylene fraction is a propylene homopolymer,
(b) optionally transferring the first polypropylene fraction into a second reactor (R2),
(c) polymerizing in the second reactor (R2) and in the presence of said first polypropylene fraction propylene and optionally at least one ethylene and/or $C_4$ to $C_{12}$ $\alpha$-olefin obtaining thereby the second polypropylene fraction, preferably said second polypropylene fraction is a second propylene homopolymer, said first polypropylene fraction and said second polypropylene fraction form the propylene polymer (PP2), i.e. the matrix of the heterophasic propylene copolymer (HECO2),
(d) transferring the propylene polymer (PP2) of step (c) into a third reactor (R3),
(e) polymerizing in the third reactor (R3) and in the presence of the propylene polymer (PP2) obtained in step (c) propylene and ethylene to obtain the elastomeric propylene copolymer (E2) dispersed in the propylene polymer (PP2), the propylene polymer (PP2) and the elastomeric propylene copolymer (E2) form the heterophasic propylene copolymer (HECO2).

Of course, in the first reactor (R1) the second polypropylene fraction can be produced and in the second reactor (R2) the first polypropylene fraction can be obtained. The same holds true for the elastomeric propylene copolymer phase.

Preferably between the second reactor (R2) and the third reactor (R3) the monomers are flashed out.

The term "sequential polymerization process" indicates that the heterophasic propylene copolymer (HECO2) is produced in at least two, like three or four reactors connected in series. Accordingly, the present process comprises at least a first reactor (R1) and a second reactor (R2), more preferably a first reactor (R1), a second reactor (R2), and a third reactor (R3). Regarding the term "polymerization reactor", reference is made to the definition provided above.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer.

According to the present invention the slurry reactor (SR) is preferably a (bulk) loop reactor (LR).

The second reactor (R2) can be a slurry reactor, like a loop reactor, as the first reactor or alternatively a gas phase reactor (GPR).

The third reactor (R3) is preferably a gas phase reactor (GPR).

Such gas phase reactors (GPR) can be any mechanically mixed or fluid bed reactors.

Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like a loop reactor (LR), whereas the second reactor (R2) and the third reactor (R3) are gas phase reactors (GPR). Accordingly for the instant process at least three, preferably three polymerization reactors, namely a slurry reactor (SR), like a loop reactor (LR), a first gas phase reactor (GPR-1) and a second gas phase reactor (GPR-2) connected in series are used. If needed prior to the slurry reactor (SR) a pre-polymerization reactor is placed.

In another preferred embodiment the first reactor (R1) and second reactor (R2) are slurry reactors (SR), like a loop reactors (LR), whereas the third reactor (R3) is a gas phase reactors (GPR). Accordingly for the instant process at least three, preferably three polymerization reactors, namely two slurry reactors (SR), like two loop reactors (LR), and a

gas phase reactor (GPR-1) connected in series are used. If needed prior to the first slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic propylene copolymer (HECO2) as defined above the conditions for the first reactor (R1), i.e. the slurry reactor (SR), like a loop reactor (LR), of step (a) may be as follows:

- the temperature is within the range of 50°C to 110°C, preferably between 60°C and 100°C, more preferably between 68 and 95°C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50°C to 130°C, preferably between 60°C and 100°C,
- the pressure is within the range of 5 bar to 50 bar, preferably between 15 bar to 35 bar,
- hydrogen can be added for controlling the molar mass in a manner known per se.

The condition in the third reactor (R3), preferably in the second gas phase reactor (GPR-2) is similar to the second reactor (R2).

The residence time can vary in the three reactor zones.

In one embodiment of the process for producing the polypropylene the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60°C, preferably from 15 to 50°C, and more preferably from 20 to 45°C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the heterophasic propylene copolymer (HECO2) is obtained by a multistage polymerization process, as described above, in the presence of a catalyst system comprising as component (i) a Ziegler-Natta procatalyst which contains a trans-esterification product of a lower alcohol and a phthalic ester.

Regarding the preferred catalyst system, reference is made to the catalyst defined above with regard to the heterophasic propylene copolymer (HECO1).

According to another preferred embodiment, the Ziegler-Natta catalyst for the preparation of the heterophasic propylene copolymer (HECO2) comprises a high-yield Ziegler-Natta type catalyst including an internal donor component, which can be used at high polymerization temperatures of 80°C or more. Such high-yield Ziegler-Natta catalyst can comprise a succinate, a diether, a phthalate etc., or mixtures therefrom as internal donor (ID) and are for example

commercially available from LyondellBasell under the Avant ZN trade name. Examples of the Avant ZN series are Avant ZN 126 and Avant ZN 168. Avant ZN 126 is a Ziegler-Natta catalyst with 3.5 wt% titanium and a diether compound as internal electron donor, which is commercially available from LyondellBasell. Avant ZN 168 is a Ziegler-Natta catalyst with 2.6 wt % titanium and a succinate compound as internal electron donor, which is commercially available from Lyondell-Baselll. A further example of the Avant ZN series is the catalyst ZN180M of LyondellBasell.

In a further embodiment, the Ziegler-Natta procatalyst for the production of the second heterophasic propylene copolymer (HECO2) can also be modified by polymerizing a vinyl compound in the presence of the catalyst system as described above.

The plastomer (PL)

According to a preferred embodiment of the present invention, the foamable polypropylene composition (C) further comprises a plastomer (PL) being a copolymer of ethylene and a $C_4$ to $C_8$ $\alpha$-olefin.

The plastomer (PL) can be any elastomeric polyolefin with the proviso that it chemically differs from the elastomeric propylene copolymers (E1) and (E2) as defined herein. More preferably the plastomer (PL) is a very low density polyolefin, still more preferably a very low density polyolefin polymerized using single site catalysis, preferably metallocene catalysis. Typically, the plastomer (PL) is an ethylene copolymer.

The plastomer (PL) has a density below 0.900 g/cm$^3$. More preferably, the density of the plastomer (PL) is equal or below 0.890 g/cm$^3$, still more preferably in the range of 0.845 to 0.890 g/cm$^3$.

Preferably, the plastomer (PL) has a melt flow rate $MFR_2$ (190°C, 2.16 kg) of less than 50 g/10 min, more preferably from 10.0 to 40 g/10 min, still more preferably from 15.0 to 35 g/10 min, like a range from 25.0 to 33.0 g/10 min.

Preferably, the plastomer (PL) comprises units derived from ethylene and a C4 to C20 $\alpha$-olefin.

The plastomer (PL) comprises, preferably consists of, units derivable from (i) ethylene and (ii) at least another C4 to C20 $\alpha$-olefin, like C4 to C10 $\alpha$-olefin, more preferably units derivable from (i) ethylene and (ii) at least another $\alpha$-olefin selected form the group consisting of 1-butene, 1-pentene, 1-hexene, 1-heptene and 1-octene. It is especially preferred that the plastomer (PL) comprises at least units derivable from (i) ethylene and (ii) 1-butene or 1-octene. It is especially preferred that the plastomer (PL) is a copolymer of ethylene and 1-octene.

In an especially preferred embodiment, the plastomer (PL) consists of units derivable from ethylene and 1-octene.

The comonomer content, like the C4 to C20 $\alpha$-olefin content, of the plastomer (PL) is in the range of 3.0 to 25.0 mol-%, more preferably in the range of 4.0 to 20.0 mol-%, still more preferably in the range of 5.0 to 15.0 mol-%, like in the range of 6.0 to 10.0 mol-%.

In one preferred embodiment the plastomer (PL) is prepared with at least one metallocene catalyst. The plastomer (PL) may also be prepared with more than one metallocene catalyst or may be a blend of multiple elastomers prepared with different metallocene catalysts. In some embodiments, the plastomer (PL) is a substantially linear ethylene polymer (SLEP). SLEPs and other metallocene catalysed plastomers (PL) are known in the art, for example, US 5,272,236. These resins are also commercially available, for example, as Queo™ plastomers available from Borealis, ENGAGE™ plastomer resins available from Dow Chemical Co. or EXACT™ polymers from Exxon or TAFMER™ polymers from Mitsui.

The high density polyethylene (HDPE)

According to a preferred embodiment of the present invention, the foamable polypropylene composition (C) further comprises a high density polyethylene (HDPE).

The expression "high density polyethylene" used in the instant invention relates to a polyethylene obtained in the presence of a Ziegler-Natta or metallocene catalyst that consists substantially, i.e. of more than 99.70 mol-%, still more preferably of at least 99.80 mol-%, of ethylene units. In a preferred embodiment only ethylene units in the high density polyethylene (HDPE) are detectable.

The high density polyethylene (HDPE) has a density of at least 0.800 g/cm$^3$. More preferably, the high density polyethylene (HDPE) has a density in the range of 0.830 to 0.970 g/cm$^3$, still more preferably in the range of 0.900 to 0.965 g/cm$^3$, like in the range of 0.940 to 0.960 g/cm$^3$.

It is especially preferred that the high density polyethylene (HDPE) has a weight average molecular weight Mw in the range of 60 to 85 kg/mol, preferably in the range of 65 to 85 kg/mol, still more preferably in the range of 70 to 80 kg/mol.

Further it is preferred that the high density polyethylene (HDPE) has a rather broad molecular weight distribution (Mw/Mn). Accordingly, it is preferred that the molecular weight distribution (Mw/Mn) of the high density polyethylene (HDPE) is in the range of 6.0 to 8.0, more preferably in the range of 6.5to 7.5, like in the range of 6.5 to 7.0.

Additionally, it is preferred that the high density polyethylene (HDPE) has a rather low melt flow rate. Accordingly, the melt flow rate MFR (190°C, 2.16 kg) measured according to ISO 1133 of the high density polyethylene (HDPE) is

preferably in the range of 0.1 to 15.0 g/10 min, more preferably in the range of 1.0 to 10.0 g/10 min, still more preferably in the range of 2.0 to 4.0 g/10 min at 190°C.

Preferably, the high density polyethylene (HDPE) according to the present invention is a high density polyethylene known in the art. In particular, it is preferred that the high density polyethylene (HDPE) is the commercial ethylene homopolymer MB7541 of Borealis AG.

Additives (AD)

In addition to the components set out above, the foamable polypropylene composition (C) of the invention may further include additives (AD). Typical additives are acid scavengers, antioxidants, colorants, light stabilisers, plasticizers, slip agents, anti-scratch agents, dispersing agents, processing aids, lubricants, pigments, and the like. As indicated above, the nucleating agent (NU) and the inorganic filler (F) are not regarded as additives (AD).

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

*The Polymeric Carrier Material*

Preferably the foamable polypropylene composition (C) of the invention does not comprise (a) further polymer (s) different to the heterophasic propylene copolymer (HECO1), the optional heterophasic propylene copolymer (HECO2), the optional propylene homopolymer (H-PP), the optional plastomer (PL) and the optional high density polyethylene (HDPE), in an amount exceeding 15 wt.-%, preferably in an amount exceeding 10 wt.-%, more preferably in an amount exceeding 9 wt.-%, based on the weight of the polypropylene composition (C). Any polymer being a carrier material for additives (AD) is not calculated to the amount of polymeric compounds as indicated in the present invention, but to the amount of the respective additive.

The polymeric carrier material of the additives (AD) is a carrier polymer to ensure a uniform distribution in the foamable polypropylene composition (C) of the invention. The polymeric carrier material is not limited to a particular polymer. The polymeric carrier material may be ethylene homopolymer, ethylene copolymer obtained from ethylene and $\alpha$-olefin comonomer such as $C_3$ to $C_8$ $\alpha$-olefin comonomer, propylene homopolymer and/or propylene copolymer obtained from propylene and $\alpha$-olefin comonomer such as ethylene and/or $C_4$ to $C_8$ $\alpha$-olefin comonomer.

Articles and uses

The foamable polypropylene composition (C) of the present invention is preferably used for the production of foamed parts, more preferably of foamed automotive parts. Even more preferred is the use for the production of foamed automotive parts, especially of car interiors and exteriors, like bumpers, side trims, step assists, body panels, spoilers, dashboards, interior trims and the like.

The current invention also provides foamed parts, more preferably of foamed automotive parts, comprising, preferably comprising at least 60 wt.-%, more preferably at least 80 wt.-%, yet more preferably at least 95 wt.-%, like consisting of, the inventive composition. Accordingly, the present invention is especially directed to parts for automotives, especially to car interiors and exteriors, like bumpers, side trims, step assists, body panels, spoilers, dashboards, interior trims and the like, comprising, preferably comprising at least 60 wt.-%, more preferably at least 80 wt.-%, yet more preferably at least 95 wt.-%, like consisting of, the inventive composition.

The present invention is also directed to the use of the inventive foamable polypropylene composition (C) for the production of a foamed part as described in the previous paragraphs.

The present invention will now be described in further detail by the examples provided below.

## EXAMPLES

### 1. Measuring methods

The following definitions of terms and determination methods apply for the above general description of the invention as well as to the below examples unless otherwise defined. **Calculation** of comonomer content of the first elastomeric propylene copolymer fraction, i.e. the polymer fraction produced in the third reactor (R3), of the heterophasic propylene copolymer (HECO1):

$$\frac{C(PP) - w(PP12)x\, C(PP12)}{w(PP3)} = C(PP3)$$

wherein

w(PP12) is the weight fraction [in wt.-%] of the first and second propylene polymer fractions, i.e. the polymer produced in the first and second reactor (R1+R2),

w(PP3) is the weight fraction [in wt.-%] of the first elastomeric propylene copolymer fraction, i.e. the polymer produced in the third reactor (R3),

C(PP12) is the comonomer content [in mol-%] of the first and second propylene polymer fractions, i.e. the polymer produced in the first and second reactor (R1+R2),

C(PP) is the comonomer content [in mol-%] of the first and second propylene polymer fractions and the first elastomeric propylene copolymer fraction, i.e. the polymer produced in the first, second and third reactor (R1+R2+R3),

C(PP2) is the calculated comonomer content [in mol-%] of the first elastomeric propylene copolymer fraction, i.e. the polymer produced in the third reactor (R3).

**Calculation** of comonomer content of the second elastomeric propylene copolymer fraction, i.e. the polymer fraction produced in the fourth reactor (R3), of the heterophasic propylene copolymer (HECO1):

$$\frac{C(PP) - w(PP123)x\, C(PP123)}{w(PP4)} = C(PP4)$$

wherein

w(PP123) is the weight fraction [in wt.-%] of the first and second propylene polymer fractions and the first elastomeric propylene copolymer fraction, i.e. the polymer produced in the first, second and third reactor (R1+R2+R3),

w(PP4) is the weight fraction [in wt.-%] of second elastomeric propylene copolymer fraction, i.e. the polymer produced in the fourth reactor (R4),

C(PP123) is the comonomer content [in mol-%] of the first and second propylene polymer fractions and the first elastomeric propylene copolymer fraction, i.e. the polymer produced in the first, second and third reactor (R1+R2+R3),

C(PP) is the comonomer content [in mol-%] of the first and second propylene polymer fractions and the first and second elastomeric propylene copolymer fractions, i.e. the polymer produced in the first, second, third and fourth reactor (R1+R2+R3),

C(PP4) is the calculated comonomer content [in mol-%] of the second elastomeric propylene copolymer fraction, i.e. the polymer produced in the fourth reactor (R4).

**Calculation** of the xylene cold soluble (XCS) content of the elastomeric propylene copolymer fraction, i.e. the polymer fraction produced in the third and fourth reactor (R3+R4), of the heterophasic propylene copolymer (HECO1):

$$\frac{XS(HECO) - w(PP12)x\, XS(PP12)}{w(E)} = XS(E)$$

wherein

w(PP12) is the weight fraction [in wt.-%] of the first and second propylene polymer fractions, i.e. the polymer produced in the first and second reactor (R1+R2),

w(E) is the weight fraction [in wt.-%] of the elastomeric propylene copolymer fraction, i.e. the polymer produced in the third and fourth reactor (R3 + R4)

XS(PP12) is the xylene cold soluble (XCS) content [in wt.-%] of the first and second propylene polymer fractions, i.e. the polymer produced in the first and second reactor (R1+R2),

XS(HECO) is the xylene cold soluble (XCS) content [in wt.-%] of the first and second propylene polymer fractions and the elastomeric propylene copolymer fraction, i.e. polymer produced in the first, second, third and fourth (R1 + R2 + R3 + R4),

XS(E) is the calculated xylene cold soluble (XCS) content [in wt.-%] of the elastomeric propylene copolymer fraction, i.e. the polymer produced in the third and fourth reactor (R3+R4).

**Calculation** of the xylene cold soluble (XCS) content of the first elastomeric propylene copolymer fraction, i.e. the polymer fraction produced in the third reactor (R3), of the heterophasic propylene copolymer (HECO1):

$$\frac{XS(PP) - w(PP12)x\ XS(PP12)}{w(PP3)} = XS(PP3)$$

wherein

w(PP12) is the weight fraction [in wt.-%] of the first and second propylene polymer fractions, i.e. the polymer produced in the first and second reactor (R1+R2),
w(PP3) is the weight fraction [in wt.-%] of the first elastomeric propylene copolymer fraction, i.e. the polymer produced in the third reactor (R3)
XS(PP12) is the xylene cold soluble (XCS) content [in wt.-%] of the first and second elastomeric propylene polymer fractions, i.e. the polymer produced in the first and second reactor (R1+R2),
XS(PP) is the xylene cold soluble (XCS) content [in wt.-%] of the first and second propylene polymer fraction and the first elastomeric propylene copolymer fraction, i.e. polymer produced in the first, second and third reactor (R1+R2+R3),
XS(PP3) is the calculated xylene cold soluble (XCS) content [in wt.-%] of the first elastomeric propylene copolymer fraction, i.e. the polymer produced in the third reactor (R3).

**Calculation** of the xylene cold soluble (XCS) content of the second elastomeric propylene copolymer fraction, i.e. the polymer fraction produced in the fourth reactor (R4):

$$\frac{XS(PP) - w(PP123)x\ XS(PP123)}{w(PP4)} = XS(PP4)$$

wherein

w(PP123) is the weight fraction [in wt.-%] of the first and second propylene polymer fractions and the first elastomeric propylene copolymer fraction, i.e. the polymer produced in the first, second and third reactor (R1+R2+R3),
w(PP4) is the weight fraction [in wt.-%] of the second propylene copolymer fraction, i.e. the polymer produced in the fourth reactor (R4)
XS(PP123) is the xylene cold soluble (XCS) content [in wt.-%] of the first and second propylene polymer fractions and the first elastomeric propylene copolymer fraction, i.e. the polymer produced in the first, second and third reactor (R1+R2+R3),
XS(PP) is the xylene cold soluble (XCS) content [in wt.-%] of the first and second propylene polymer fractions and the first and second elastomeric propylene copolymer fractions, i.e. polymer produced in the first, second reactor and third reactor (R1 + R2 + R3 + R4),
XS(PP4) is the calculated xylene cold soluble (XCS) content [in wt.-%] of the second elastomeric propylene copolymer fraction, i.e. the polymer produced in the fourth reactor (R4).

**Calculation** of melt flow rate $MFR_2$ (230°C) of the second propylene polymer fraction, i.e. the polymer fraction produced in the second reactor (R2), of the heterophasic propylene copolymer (HECO1):

$$MFR(PP2) = 10^{\left[\frac{\log(MFR(PP)) - w(PP1)\ x\ \log(MFR(PP1))}{w(PP2)}\right]}$$

wherein

w(PP1) is the weight fraction [in wt.-%] of the first propylene polymer fraction, i.e. the polymer produced in the first reactor (R1),
w(PP2) is the weight fraction [in wt.-%] of the first second propylene polymer fraction, i.e. the polymer produced

in the second reactor (R2),

MFR(PP1) is the melt flow rate $MFR_2$ (230°C) [in g/10min] of the first propylene polymer fraction, i.e. the polymer produced in the first reactor (R1),

MFR(PP) is the melt flow rate $MFR_2$ (230°C) [in g/10min] of the first and second propylene polymer fractions, i.e. the polymer produced in the first and second reactor (R1 + R2),

MFR(PP2) is the calculated melt flow rate $MFR_2$ (230°C) [in g/10min] of the first propylene polymer fraction, i.e. the polymer produced in the second reactor (R2).

**Calculation** of the intrinsic viscosity of the xylene soluble fraction of the first elastomeric propylene copolymer fraction, i.e. the polymer fraction produced in the third reactor (R3), of the heterophasic propylene copolymer (HECO1):

$$\frac{IV(PP) - XCS(PP12)x\, IV(PP12)}{XCS(PP3)} = IV(PP3)$$

wherein

XCS(PP12) is the xylene soluble fraction [in wt.-%] of the first and second propylene polymer fractions, i.e. the polymer produced in the first and second reactor (R1+R2),

XCS(PP3) is the xylene soluble fraction [in wt.-%] of the first elastomeric propylene copolymer fraction, i.e. the polymer produced in the third reactor (R3),

IV(PP12) is the intrinsic viscosity [in dl/g] of the xylene soluble fraction of the first and second propylene polymer fractions, i.e. the polymer produced in the first and second reactor (R1+R2),

IV(PP) is the intrinsic viscosity [in dl/g] of the xylene soluble fraction of the first and second propylene polymer fractions and the first elastomeric propylene copolymer fraction, i.e. polymer produced in the first, second and third reactor (R1 + R2 + R3),

IV(PP3) is the calculated intrinsic viscosity [in dl/g] of the xylene soluble fraction of the first elastomeric propylene copolymer fraction, i.e. the polymer produced in the third reactor (R3).

**Calculation** of the intrinsic viscosity of the xylene soluble fraction of the second elastomeric propylene copolymer fraction, i.e. the polymer fraction produced in the fourth reactor (R4), of the heterophasic propylene copolymer (HECO1):

$$\frac{IV(PP) - XCS(PP123)x\, IV(PP123)}{XCS(PP4)} = IV(PP4)$$

wherein

XCS(PP123) is the xylene soluble fraction [in wt.-%] of the first and second propylene polymer fractions and the first elastomeric propylene copolymer fraction, i.e. the polymer produced in the first, second and third reactor (R1 + R2 + R3),

XCS(PP4) is the xylene soluble fraction [in wt.-%] of second elastomeric propylene copolymer fraction, i.e. the polymer produced in the fourth reactor (R4),

IV(PP123) is the intrinsic viscosity [in dl/g] of the xylene soluble fraction of the first and second propylene polymer fractions and the first elastomeric propylene copolymer fraction, i.e. the polymer produced in the first, second and third reactor (R1 + R2 + R3),

IV(PP) is the intrinsic viscosity [in dl/g] of the xylene soluble fraction of the first and second propylene polymer fractions and the first and second elastomeric propylene copolymer fractions, i.e. polymer produced in the first, second, third and fourth reactor (R1 + R2 + R3 + R4),

IV(PP4) is the calculated intrinsic viscosity [in dl/g] of the xylene soluble fraction of the second elastomeric propylene copolymer fraction, i.e. the polymer produced in the fourth reactor (R4).

**Calculation** of comonomer content of the elastomeric propylene copolymer fraction, i.e. the polymer fraction produced in the third and fourth reactor (R3+R4), of the heterophasic propylene copolymer (HECO1):

$$\frac{C(HECO) - w(PP12)x\, C(PP12)}{w(E)} = C(E)$$

wherein

w(PP12) is the weight fraction [in wt.-%] of the first and second propylene polymer fractions, i.e. the polymer produced in the first and second reactor (R1+R2),
w(E) is the weight fraction [in wt.-%] of the elastomeric propylene copolymer fraction, i.e. the polymer produced in the third and fourth reactor (R3 + R4)
C(PP12) is the comonomer content [in mol -%] of the first and second propylene polymer fractions, i.e. the polymer produced in the first and second reactor (R1+R2),
C(HECO) is the comonomer content [in mol -%] of the first and second propylene polymer fractions and the elastomeric propylene copolymer, i.e. polymer produced in the first, second, third and fourth (R1 + R2 + R3 + R4),
C(E) is the calculated comonomer content [in mol -%] of the elastomeric propylene copolymer fraction, i.e. the polymer produced in the third and fourth reactor (R3+R4).

**Calculation** of comonomer content of the elastomeric copolymer fraction, i.e. the polymer fraction produced in the third reactor (R3), of the heterophasic propylene copolymer (HECO2):

$$\frac{C(PP) - w(PP12)x\,C(PP12)}{w(PP3)} = C(PP3)$$

wherein

w(PP12) is the weight fraction [in wt.-%] of the first and second propylene polymer fraction, i.e. the polymer produced in the first and second reactor (R1+R2),
w(PP3) is the weight fraction [in wt.-%] of the elastomeric propylene copolymer fraction, i.e. the polymer produced in the third reactor (R3),
C(PP12) is the comonomer content [in mol-%] of the first and second propylene polymer fraction, i.e. the polymer produced in the first and second reactor (R1+R2),
C(PP) is the comonomer content [in mol-%] of the first propylene polymer fraction, the second propylene polymer fraction and the elastomeric propylene copolymer fraction, i.e. polymer produced in the first, second and third reactor (R1 + R2 + R3),
C(PP3) is the calculated comonomer content [in mol-%] of the elastomeric propylene copolymer fraction, i.e. the polymer produced in the third reactor (R3).

**Calculation** of the xylene cold soluble (XCS) content of the elastomeric propylene copolymer fraction, i.e. the polymer fraction produced in the third reactor (R3), of the heterophasic propylene copolymer (HECO2):

$$\frac{XS(HECO) - w(PP12)x\,XS(PP12)}{w(E)} = XS(E)$$

wherein

w(PP12) is the weight fraction [in wt.-%] of the first and second propylene polymer fraction, i.e. the polymer produced in the first and second reactor (R1+R2),
w(E) is the weight fraction [in wt.-%] of the elastomeric propylene copolymer fraction, i.e. the polymer produced in the third reactor (R3)
XS(PP12) is the xylene cold soluble (XCS) content [in wt.-%] of the first and second propylene polymer fraction, i.e. the polymer produced in the first and second reactor (R1+R2),
XS(HECO) is the xylene cold soluble (XCS) content [in wt.-%] of the first propylene polymer fraction, the second propylene polymer fraction and the elastomeric propylene copolymer fraction, i.e. polymer produced in the first, second reactor and third reactor (R1 + R2 + R3),
XS(E) is the calculated xylene cold soluble (XCS) content [in wt.-%] of the elastomeric propylene copolymer fraction, i.e. the polymer produced in the second and third reactor (R2+3).

**Calculation** of melt flow rate $MFR_2$ (230°C) of the elastomeric propylene copolymer fraction, i.e. the polymer fraction produced in the third reactor (R3), of the heterophasic propylene copolymer (HECO2):

$$MFR(PP3) = 10^{\left[\frac{\log(MFR(PP)) - w(PP12)\ x \log(MFR(PP12))}{w(PP3)}\right]}$$

wherein

| | |
|---|---|
| w(PP12) | is the weight fraction [in wt.-%] of the first and second propylene polymer fractions, i.e. the polymer produced in the first and second reactor (R1+R2), |
| w(PP3) | is the weight fraction [in wt.-%] of the elastomeric propylene copolymer fraction, i.e. the polymer produced in the third reactor (R3), |
| MFR(PP12) | is the melt flow rate $MFR_2$ (230°C) [in g/10min] of the first and second propylene fractions, i.e. the polymer produced in the first and second reactor (R1+R2), |
| MFR(PP) | is the melt flow rate $MFR_2$ (230°C) [in g/10min] of the first and second propylene polymer fractions and the elastomeric propylene copolymer fraction, i.e. the polymer produced in the first, second and third reactor (R1 + R2 + R3), |
| MFR(PP3) | is the calculated melt flow rate $MFR_2$ (230°C) [in g/10min] of the elastomeric propylene copolymer fraction, i.e. the polymer produced in the third reactor (R3). |

**Calculation** of comonomer content of the elastomeric propylene copolymer fraction, i.e. the polymer fraction produced in the third reactor (R3), of the heterophasic propylene copolymer (HECO2):

$$\frac{C(HECO) - w(PP)x\,C(PP)}{w(E)} = C(E)$$

wherein

| | |
|---|---|
| w(PP) | is the weight fraction [in wt.-%] of the first and second propylene polymer fractions, i.e. the polymer produced in the first and second reactor (R1+R2), |
| w(E) | is the weight fraction [in wt.-%] of the elastomeric propylene copolymer, i.e. of the polymer produced in the third reactor (R3), |
| C(PP) | is the comonomer content [in mol -%] of the first and second propylene polymer fractions, i.e. the polymer produced in the first and second reactor (R1+R2), |
| C(HECO) | is the comonomer content [in mol -%] of the propylene copolymer, i.e. is the comonomer content [in mol -%] of the polymer obtained after polymerization in the third reactor (R3), |
| C(E) | is the calculated comonomer content [in mol -%] of the elastomeric propylene copolymer fraction, i.e. of the polymer produced in the third reactor (R3). |

**$MFR_2$ (230°C)** is measured according to ISO 1133 (230°C, 2.16 kg load).
**$MFR_2$ (190°C)** is measured according to ISO 1133 (190°C, 2.16 kg load).

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable

referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm\ /\ \text{sum of all pentads})$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * (P_{21e} / P_{total})$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1\text{-}fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Quantification of comonomer content of the plastomer (PL) by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382.; Parkinson, M., Klimke, K., Spiess, H.W., Wilhelm, M., Macromol. Chem. Phys. 2007;208:2128.; Castignolles, P., Graf, R., Parkinson, M., Wilhelm, M., Gaborieau, M., Polymer 50 (2009) 2373; NMR Spectroscopy of Polymers: Innovative Strategies for Complex Macromolecules, Chapter 24, 401 (2011)). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813.; Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239.; Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta$ +) at 30.00 ppm (J. Randall, Macromol. Sci., Rev. Macromol. Chem. Phys. 1989, C29, 201.).

***Poly(ethyelene-co-octene) - octene content***

Characteristic signals corresponding to the incorporation of 1-octene were observed (J. Randall, Macromol. Sci., Rev. Macromol. Chem. Phys. 1989, C29, 201.; Liu, W., Rinaldi, P., McIntosh, L., Quirk, P., Macromolecules 2001, 34, 4757; Qiu, X., Redwine, D., Gobbi, G., Nuamthanom, A., Rinaldi, P., Macromolecules 2007, 40, 6879) and all comonomer contents calculated with respect to all other monomers present in the polymer. Characteristic signals resulting from isolated 1-octene incorporation i.e. EEOEE comonomer sequences, were observed. Isolated 1-octene incorporation was quantified using the integral of the signal at 38.37 ppm. This integral is assigned to the unresolved signals corresponding to both $_*B6$ and $_*\beta B6B6$ sites of isolated (EEOEE) and isolated double non-consecutive (EEOEOEE) 1-octene sequences respectively. To compensate for the influence of the two $_*\beta B6B6$ sites the integral of the $\beta\beta B6B6$ site at 24.7 ppm is used:

$$O = I_{*B6+*\beta B6B6} - 2 * I_{\beta\beta B6B6}$$

Characteristic signals resulting from consecutive 1-octene incorporation, i.e. EEOOEE comonomer sequences,

were also observed. Such consecutive 1-octene incorporation was quantified using the integral of the signal at 40.57 ppm assigned to the ααB6B6 sites accounting for the number of reporting sites per comonomer:

$$OO = 2 * I_{\alpha\alpha B6B6}$$

Characteristic signals resulting from isolated non-consecutive 1-octene incorporation, i.e. EEOEOEE comonomer sequences, were also observed. Such isolated non-consecutive 1-octene incorporation was quantified using the integral of the signal at 24.7 ppm assigned to the ββB6B6 sites accounting for the number of reporting sites per comonomer:

$$OEO = 2 * I_{\beta\beta B6B6}$$

Characteristic signals resulting from isolated triple-consecutive 1-octene incorporation, i.e. EEOOOEE comonomer sequences, were also observed. Such isolated triple-consecutive 1-octene incorporation was quantified using the integral of the signal at 41.2 ppm assigned to the ααγB6B6B6 sites accounting for the number of reporting sites per comonomer:

$$OOO = 3/2 * I_{\alpha\alpha\gamma B6B6B6}$$

With no other signals indicative of other comonomer sequences observed the total 1-octene comonomer content was calculated based solely on the amount of isolated (EEOEE), isolated double-consecutive (EEOOEE), isolated non-consecutive (EEOEOEE) and isolated triple-consecutive (EEOOOEE) 1-octene comonomer sequences:

$$O_{total} = O + OO + OEO + OOO$$

Characteristic signals resulting from saturated end-groups were observed. Such saturated end-groups were quantified using the average integral of the two resolved signals at 22.84 and 32.23 ppm. The 22.84 ppm integral is assigned to the unresolved signals corresponding to both 2B6 and 2S sites of 1-octene and the saturated chain end respectively. The 32.23 ppm integral is assigned to the unresolved signals corresponding to both 3B6 and 3S sites of 1-octene and the saturated chain end respectively. To compensate for the influence of the 2B6 and 3B6 1-octene sites the total 1-octene content is used:

$$S = (1/2)*( I_{2S+2B6} + I_{3S+3B6} - 2*O_{total})$$

The ethylene comonomer content was quantified using the integral of the bulk methylene (bulk) signals at 30.00 ppm. This integral included the γ and 4B6 sites from 1-octene as well as the $\delta^+$ sites. The total ethylene comonomer content was calculated based on the bulk integral and compensating for the observed 1-octene sequences and end-groups:

$$E_{total} = (1/2)*[ I_{bulk} + 2*O + 1*OO + 3*OEO + 0*OOO + 3*S ]$$

It should be noted that compensation of the bulk integral for the presence of isolated tripleincorporation (EEOOOEE) 1-octene sequences is not required as the number of under and over accounted ethylene units is equal.

The total mole fraction of 1-octene in the polymer was then calculated as:

$$fO = ( O_{total} / ( E_{total} + O_{total} )$$

The total comonomer incorporation of 1-octene in mol percent was calculated from the mole fraction in the standard manner:

$$O[mol\%] = 100 * fO$$

The mole percent ethyelene incorporation was calculated from the formula:

$$E[mol\%] = 100 - O[mol\%].$$

***Poly(ethyelene-co-butene) - butene content***

Characteristic signals corresponding to the incorporation of 1-butene were observed (J. Randall, Macromol. Sci., Rev. Macromol. Chem. Phys. 1989, C29, 201) and all comonomer contents calculated with respect to all other monomers present in the polymer.

Characteristic signals resulting from isolated 1-butene incorporation i.e. EEBEE comonomer sequences, were observed. Isolated 1-butene incorporation was quantified using the integral of the signal at 39.9 ppm assigned to the *B2 sites, accounting for the number of reporting sites per comonomer:

$$B = I_{*B2}$$

Characteristic signals resulting from double consecutive 1-butene incorporation i.e. EEBBEE comonomer sequences were observed. Consecutive double 1-butene incorporation was quantified using the integral of the signal at 39.4 ppm assigned to the aaB2B2 sites accounting for the number of reporting sites per comonomer:

$$BB = 2 * I_{\alpha\alpha B2B2}$$

Characteristic signals resulting from non consecutive 1-butene incorporation i.e. EEBEBEE comonomer sequences were also observed. Non-consecutive 1-butene incorporation was quantified using the integral of the signal at 24.7 ppm assigned to the ββB2B2 sites accounting for the number of reporting sites per comonomer:

$$BEB = 2 * I_{\beta\beta B2B2}$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

Characteristic signals resulting from triple consecutive 1-butene incorporation i.e. EEBBBEE comonomer sequences were observed. Consecutive triple 1-butene incorporation was quantified using the integral of the signal at 40.4 ppm assigned to the ααγB2B2B2 sites accounting for the number of reporting sites per comonomer:

$$BBB = 3 * I_{\alpha\alpha\gamma B2B2B2}$$

With no other signals indicative of other comonomer sequences, i.e. butene chain initiation, observed the total 1-butene comonomer content was calculated based solely on the amount of isolated (EEBEE), double consecutive (EEBBEE), non-consecutive (EEBEBEE) and triple consecutive (EEBBBEE) 1-butene comonomer sequences:

$$B_{total} = B + BB + BEB + BBB$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*( I_{2S} + I_{3S} )$$

The relative content of ethylene was quantified using the integral of the bulk methylene (δ+) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B + (7/2)*BB + (9/2)*BEB + (9/2)*BBB + (3/2)*S$$

The total mole fraction of 1-butene in the polymer was then calculated as:

$$fB = ( B_{total} / ( E_{total} + B_{total} )$$

The total comonomer incorporation of 1-butene in mole percent was calculated from the mole fraction in the usual manner:

$$B\ [mol\%] = 100 * fB$$

The mole percent ethyelene incorporation was calculated from the formula:

$$E[mol\%] = 100 - B[mol\%].$$

**Number average molecular weight ($M_n$), weight average molecular weight ($M_w$) and molecular weight distribution (MWD)**

Molecular weight averages (Mw, Mn), and the molecular weight distribution (MWD), i.e. the Mw/Mn (wherein Mn is the number average molecular weight and Mw is the weight average molecular weight), were determined by Gel Permeation

Chromatography (GPC) according to ISO 16014-4:2003 and ASTM D 6474-99. A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/L 2,6-Di tert butyl-4-methyl-phenol) as solvent at 160°C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160°C) of stabilized TCB (same as mobile phase) for 2.5 hours for PP or 3 hours for PE at max. 160°C under continuous gentle shaking in the autosampler of the GPC instrument.

**Melting temperature and degree of crystallinity**

DSC analysis: melting temperature (Tm), crystallization temperature (Tc): measured with a TA Instrument Q2000 differential scanning calorimeter (DSC) on 5 to 7 mg samples. DSC run according to ISO 11357 / part 3 / method C2 in a heat / cool / heat cycle with a scan rate of 10°C/min in the temperature range of - 30 to +230°C. Crystallization temperature was determined from the cooling step, while melting temperature was determined from the heating scan.

**Intrinsic viscosity** is measured according to DIN ISO 1628/1, October 1999 (in Decalin at 135°C).

**The xylene solubles (XCS, wt.-%):** Content of xylene cold solubles (XCS) is determined at 25°C according ISO 16152; first edition; 2005-07-01. The part which remains insoluble is the xylene cold insoluble (XCI) fraction.

**Flexural Modulus:** The flexural modulus was determined in 3-point-bending according to ISO 178 on 80x10x4 or 3 or 2 mm test bars as indicated injection molded at 23°C in line with EN ISO 1873-2. In case of non-foamed specimen 80x10x4 mm the test speed for modulus determination was 2 mm/s, while for specimen with dimensions of 80x10x3 or 2 mm the test speed was 1.3 mm/s.

**Charpy notched impact test:** The charpy notched impact strength (Charpy NIS) was measured according to ISO 179 2C / DIN 53453 at +23°C, using injection molded bar test specimens of 80x10x4 mm prepared in accordance with ISO 294-1:1996.

**Puncture energy and energy to maximum force** were determined on plaques with dimensions 100x148x2 or 3 mm during instrumented falling weight impact testing according to ISO 6603-2. The test was performed at room temperature with a lubricated tip striker with a diameter of 20 mm and impact velocity of 10 mm/s. The deformation mechanism was classified according to ISO 6603-2: 2000 - Chapter 8: Calculations.

**Mean square error (MSE)** is a values which gives information about the surface homogeneity. The value was calculated according to a method described in detail in WO 2010/149529, which is incorporated herein in its entirety. An optical measurement system, as described by Sybille Frank et al. in PPS 25 Intern. Conf. Polym. Proc. Soc 2009 or Proceedings of the SPIE, Volume 6831, pp 68130T-68130T-8 (2008) was used for characterizing the surface quality.

This method consists of two aspects:

1. Image recording:

The basic principle of the measurement system is to illuminate the plates with a defined light source (LED) in a closed environment and to record an image with a CCD-camera system.

2. Image analysis:

The specimen is floodlit from one side and the upwards reflected portion of the light is deflected via two mirrors to a CCD-sensor. The created grey value image is analyzed in lines. From the recorded deviations of grey values the mean square error average (MSEaverage) or mean square error maximum (MSEmax) values are calculated allowing a quantification of surface quality/homogeneity, i.e. the higher the MSE value the more pronounced is the surface defect.

The MSEaverage values were collected on compact injection-moulded plaques 440x148x2.8 mm produced with grain K50. The plaques were injection-moulded with filling times of 3 sec.

Further conditions:

Melt temperature: 240°C
Mould temperature 30°C
Dynamic pressure: 10 bar hydraulic

In case of foamed injection moulded plates a qualitative surface evaluation was done by collecting images from the surface of A5 plaques.

**2. Examples**

**Preparation of the catalyst for HECO1 and HECO3**

First, 0.1 mol of $MgCl2 \times 3\ EtOH$ was suspended under inert conditions in 250 ml of decane in a reactor at atmospheric pressure. The solution was cooled to the temperature of -15°C and 300 ml of cold TiCl4 was added while maintaining the temperature at said level. Then, the temperature of the slurry was increased slowly to 20°C. At this temperature, 0.02 mol of dioctylphthalate (DOP) was added to the slurry. After the addition of the phthalate, the temperature was raised to 135°C during 90 minutes and the slurry was allowed to stand for 60 minutes. Then, another 300 ml of TiCl4 was added and the temperature was kept at 135°C for 120 minutes. After this, the catalyst was filtered from the liquid and washed six times with 300 ml heptane at 80°C. Then, the solid catalyst component was filtered and dried. Catalyst and its preparation concept is described in general e.g. in patent publications EP 491566, EP 591224 and EP 586390.

The catalyst was further modified (VCH modification of the catalyst). 35 ml of mineral oil (Paraffinum Liquidum PL68) was added to a 125 ml stainless steel reactor followed by 0.82 g of triethyl aluminum (TEAL) and 0.33 g of dicyclopentyl dimethoxy silane (donor D) under inert conditions at room temperature. After 10 minutes 5.0 g of the catalyst prepared above (Ti content 1.4 wt.-%) was added and after additionally 20 minutes 5.0 g of vinylcyclohexane (VCH) was added. The temperature was increased to +60°C during 30 minutes and was kept there for 20 hours. Finally, the temperature was decreased to +20°C and the concentration of unreacted VCH in the oil/catalyst mixture was analysed and was found to be 200 ppm weight

**Preparation of the catalyst for HECO2**

The catalyst for the preparation of HECO2 is the commercial catalyst ZN180M by Lyondell Basell used along with dicyclopentyl dimethoxy silane (donor D) as donor.

The aluminum to donor ratio, the aluminum to titanium ratio and the polymerization conditions are indicated in table 1.

**Table 1:** Preparation of HECO1, HECO2 and HECO3

| | | **HECO1** | **HECO2** | **HECO3** |
|---|---|---|---|---|
| Prepolymerization | | | | |
| TEAL/Ti | [mol/mol] | 200 | 220 | 220 |

(continued)

| | | HECO1 | HECO2 | HECO3 |
|---|---|---|---|---|
| Prepolymerization | | | | |
| TEAL/donor | [mol/mol] | 10.3 | 10 | 7.3 |
| Temperature | [°C] | 30 | 30 | 30 |
| res.time | [h] | 0.26 | 0.08 | 0.08 |
| **Loop** | | | | |
| Temperature | [°C] | 76 | 75 | 72 |
| Split | [%] | 47.5 | 52 | 30 |
| H2/C3 ratio | [mol/kmol] | 24.7 | 22 | 15 |
| C2/C3 ratio | [mol/kmol] | 0 | 0 | 0 |
| $MFR_2$ | [g/10min] | 160 | 160 | 55 |
| XCS | [wt.-%] | 2.1 | 2.0 | 2.0 |
| C2 content | [mol-%] | 0 | 0 | 0 |
| **GPR 1** | | | | |
| Temperature | [°C] | 80 | 80 | 80 |
| Pressure | [kPa] | 2400 | 2200 | 2231 |
| Split | [%] | 31.7 | 34 | 40 |
| H2/C3 ratio | [mol/kmol] | 44.8 | 175 | 150 |
| C2/C3 ratio | [mol/kmol] | 0 | 0 | 0 |
| $MFR_2$ | [g/10min] | 55 | 160 | 55 |
| XCS | [wt.-%] | 2.0 | 13.0 | 2.0 |
| C2 content | [mol-%] | 0 | 0 | 0 |
| **GPR 2** | | | | |
| Temperature | [°C] | 67 | 80 | 70 |
| Pressure | [kPa] | 2100 | 2190 | 2291 |
| Split | [%] | 11.7 | 14 | 20 |
| C2/C3 ratio | [mol/kmol] | 242 | 550 | 584 |
| H2/C2 ratio | [mol/kmol] | 22.8 | 250 | 117 |
| $MFR_2$ | [g/10min] | 20 | 95 | 11 |
| XCS | [wt.-%] | 18 | 15 | 18 |
| IV (XCS) | [dl/g] | Nd | 2.3 | nd |
| C2 (XCS) | [mol-%] | Nd | 50 | nd |
| C2 content | [mol-%] | 10 | 8.7 | 17.5 |

(continued)

| GPR 3 | | | | |
|---|---|---|---|---|
| Temperature | [°C] | 67 | | 85 |
| Pressure | bar | 1500 | | 1421 |
| Split | [%] | 9.1 | | 15 |
| C2/C3 ratio | [mol/kmol] | 250 | | 585 |
| H2/C2 ratio | [mol/kmol] | 22,4 | | 93 |
| $MFR_2$ | [g/10min] | 5.50 | | 11 |
| XCS | [wt.-%] | 25 | | 32 |
| IV (XCS) | [dl/g] | 6.3 | | 3.1 |
| C2 (XCS) | [mol-%] | 28.5 | | 48 |
| C2 content | [mol-%] | 7 | | 18.5 |

| | |
|---|---|
| C2 | ethylene |
| H2/C3 ratio | hydrogen / propylene ratio |
| C2/C3 ratio | ethylene / propylene ratio |
| H2/C2 ratio | hydrogen / ethylene ratio |
| GPR 1/2/3 | 1st/2nd/3rd gas phase reactor |
| Loop | Loop reactor |

A Borstar PP pilot plant comprised of a stirred-tank prepolymerization reactor, a liquid-bulk loop reactor, and one, two or three gas phase reactors (GPR1 to GPR3) were used for the main polymerization. The resulting polymer powders were compounded in a co-rotating twin-screw extruder Coperion ZSK 57 at 220°C with 0.2 wt.-% of Irganox B225 (1:1-blend of Irganox 1010 (Pentaerythrityl-tetrakis(3-(3',5'-di-tert.butyl-4-hydroxytoluyl)-propionate and tris (2,4-di-t-5 butylphenyl) phosphate) phosphite) of BASF AG, Germany) and 0.05 wt.-% calcium stearate.

**Preparation of the composition (C)**

Inventive examples IE1, IE2 and IE4 and comparative examples CE1, CE2 and CE3 and E4 HECO1, HECO2, HECO3, H-PP, PL, HDPE and inorganic filler were melt blended in a co-rotating twin screw extruder in amounts as indicated in Table 2. The polymer melt mixture was discharged and pelletized.

Injection-moulding foaming was performed on an Engel E380 machine using 3 wt.- %, based on the total weight of the composition, chemical blowing agent masterbatch POLYTHLENE EE25C manufactured by EIWA CHEMICAL IND. CO., LTD, which comprises the foaming agent sodium hydrogen carbonate dispersed in a polyethylene matrix. The materials were foamed using core back technology from 2 mm starting thickness to 3 mm end thickness.

**Table 2:** Properties of comparative and inventive examples

| | | IE1 | CE1 | IE2 | CE2 | E4 | IE4 | CE3 |
|---|---|---|---|---|---|---|---|---|
| HECO1 | [wt.-%] | 78.50 | | 78.50 | | 21.00 | 78.50 | |
| HECO2 | [wt.-%] | | | | | 48.90 | | |
| HECO3 | [wt.-%] | | 61.50 | | 63.50 | | | 63.50 |
| H-PP | [wt.-%] | 20.00 | 37.00 | 15.00 | 30.00 | | 5.00 | 20.00 |
| HDPE | [wt.-%] | | | | | 6.00 | | |
| PL | [wt.-%] | | | | | 7.00 | | |
| Talc | [wt.-%] | | | 5.00 | 5.00 | 10.00 | 15.00 | 15.00 |
| Nucleating agent | [wt.-%] | | | | | 0.20 | | |
| Scratch additive | [wt.-%] | | | | | 2.00 | | |

(continued)

| | | IE1 | CE1 | IE2 | CE2 | E4 | IE4 | CE3 |
|---|---|---|---|---|---|---|---|---|
| Stabilization additives | [wt.-%] | | | | | 1.40 | | |
| Carbon black | [wt.-%] | 1.50 | 1.50 | 1.50 | 1.50 | 3.50 | 1.5 | 1.5 |
| **Properties on standard non-foamed specimen, 4 mm thickness** | | | | | | | | |
| XCS calculated | [wt.-%] | 20 | 20 | 20 | 20 | 19 | 20 | 20 |
| $MFR_2$ | [g/10min] | 10 | 23 | 8 | 22 | 21 | 6.18 | 13.9 |
| Flexural Modulus | [MPa] | 1202 | 1240 | 1514 | 1532 | 1700 | 2150 | 2200 |
| Charpy impact strength, +23°C | [kJ/m$^2$] | 36 | 13 | 38 | 12 | 15 | 40 | 11 |
| MSE 3 sec | - | 5 | 8 | 4 | 5 | 6 | 17 | 13 |
| **Properties on specimen cut from a non-foamed plaque, 2 mm thickness** | | | | | | | | |
| Flexural Modulus | [MPa] | 1331 | 1303 | 1624 | 1627 | 1841 | 2250 | 2340 |
| Puncture energy, +23°C | [J] | 31 | 28 | 31 | 26 | 29 | 30 | 19 |
| Energy to max, +23°C | [J] | 11 | 11 | 13 | 12 | 12 | 12 | 11 |
| **Properties on specimen cut from a foamed plaque, 3 mm thickness** | | | | | | | | |
| Flexural Modulus | [MPa] | 875 | 885 | 1115 | 1130 | 1373 | 1588 | 1651 |
| Puncture energy, +23°C | [J] | 19 | 9 | 19 | 8.5 | 15 | 19 | 9 |
| Energy to max, +23°C | [J] | 10 | 8 | 11 | 7 | 11 | 11 | 6 |
| Deformation mechanism | - | ductile | brittle | ductile | brittle | ductile | ductile | brittle |

**H-PP** is the commercial propylene homopolymer HJ120UB of Borealis AG having a melt flow rate $MFR_2$ (230°C) of 75 g/10min, a density of 905 kg/m$^3$ and a glass transition temperature Tg of +2°C.
**PL** is the commercial ethylene-octene copolymer plastomer Engage 8842 of Dow Chemical Co.
**HDPE** is the commercial high density polyethylene MB7541 of Borealis.
**Nucleating agent** is the ADK STAB NA-21 hydroxybis (2,4,8,10-tetra-tert. butyl-6-hydroxy-12H-dibenzo(d,g)(1.,3,2) dioxaphosphocin 6-oxidato) aluminium.
**Talc** is the commercial Talc Luzenac T84 from Imerys.
**Carbon black** is a masterbatch of 70 wt.-% of linear density polyethylene (LDPE) and 30 wt.-% carbon black, with MFR (190°C/21.6 kg) of 15 g/10min.
**Scratch additive** is a dimethyl siloxane based masterbatch from Dow Corning.
**Stabilization additives** 0.2 wt.-% UV-light stabilizers (1:1 mixture of n-Hexadecyl- 3,5-di-t-butyl-4-hydroxybenzoate and a mixture of esters of 2,2,6,6-tetramethyl-4-piperidinol and higher fatty acids); 0.15 wt.-% Octadecyl 3-(3',5'-di-tert. butyl-4-hydroxyphenyl)propionate; 0.10 wt.-% of Tris (2,4-di-t-butylphenyl) phosphite; 0.95 wt.-% of of the polypropylene homopolymer HC001A-B1.

The inventive example IE1 shows that the addition of more than 50 wt.-% of HECO1 to a polyproyplene homopolymer helped to achieve puncture energy and energy to max force at high level on foamed parts which is not the case for the corresponding comparative example CE1. The same result was observed for the compositions IE2 and E4 further filled with inorganic filler.

E4 is a composition with similar properties to IE1, IE2 and IE4 which were achieved at lower content of HECO1 but in combination with HECO2, HDPE and a plastomer being a copolymer of ethylene and a $C_8$ $\alpha$-olefin. The surface appearance of the inventive examples was excellent.

## Claims

1. Foamable polypropylene composition (C) comprising

   a) a heterophasic propylene copolymer (HECO1) having a melt flow rate $MFR_2$ (230°C, 2.16 kg) measured according to ISO 1133 in the range from 3 to 10 g/10min and a xylene cold soluble (XCS) fraction determined at 25°C according ISO 16152 in the range of 10.0 to 30.0 wt.-% , said heterophasic propylene copolymer (HECO1) comprising

      i) a matrix (M1) being a propylene polymer (PP1) and
      ii) an elastomeric propylene copolymer (E1) being dispersed in said matrix,

   b) a propylene homopolymer (H-PP),
   c) optionally an inorganic filler (F), wherein the inorganic filler (F) is talc and/or carbon black, and
   d) at least one foaming agent (FA) selected from chemical and physical foaming agents, whereby the composition (C) comprises:

      i) 68.0 to 96.99 wt.-% of the heterophasic propylene copolymer (HECO1),
      ii) 3.0 to 30.0 wt.-% of the propylene homopolymer (H-PP),
      iii) 0 to 18.0 wt.-% of the inorganic filler (F), and
      iv) 0.01 to 4.0 wt.-% of the foaming agent (FA),

   based on the overall polypropylene composition (C).

2. Foamable polypropylene composition (C) according to claim 1, wherein the heterophasic propylene copolymer (HECO1) has

   i) a comonomer content of the xylene cold soluble (XCS) fraction determined by the method described in the examples ≤ 45.0 mol-%, preferably ≤ 40.0 mol-%, more preferably between 5.0 and 40.0 mol.-%, and/or
   ii) an intrinsic viscosity (IV) of the xylene cold soluble (XCS) fraction determined by the method described in the examples > 3.5 dl/g.

3. Foamable polypropylene composition (C) according to claim 1 or 2, further comprising a heterophasic propylene copolymer (HECO2) comprising

   i) a matrix (M2) being a propylene polymer (PP2) and
   ii) an elastomeric propylene copolymer (E2) being dispersed in said matrix.

4. Foamable polypropylene composition (C) according to claim 3, wherein the heterophasic propylene copolymer (HECO2) has

   i) a melt flow rate $MFR_2$ (230°C, 2.16 kg) measured according to ISO 1133 in the range from 50 to 120 g/10min, and/or
   ii) a xylene cold soluble (XCS) fraction determined at 25°C according ISO 16152 in the range of 12.0 to 35.0 wt.-%, and/or
   iii) a comonomer content of the xylene cold soluble (XCS) fraction determined by the method described in the examples in the range from 35.0 to 65.0 mol-%, and/or
   iv) an intrinsic viscosity (IV) of the xylene cold soluble (XCS) fraction determined by the method described in the examples < 3.5 dl/g.

5. Foamable polypropylene composition (C) according to claim 4, further comprising a high density polyethylene (HDPE) and/or a plastomer (PL) being a copolymer of ethylene and a $C_4$ to $C_8$ $\alpha$-olefin.

6. Foamable polypropylene composition (C) according to any one of the preceding claims, wherein the matrix (M1) of the heterophasic propylene copolymer (HECO1) and/or the matrix (M2) of the heterophasic propylene copolymer (HECO2) has/have a melt flow rate $MFR_2$ (230°C, 2.16 kg) measured according to ISO 1133 in the range from 50.0 to 200.0 g/10min.

**7.** Foamable polypropylene composition (C) according to any one of the preceding claims, wherein the propylene homopolymer (H-PP), preferably a semicrystalline propylene homopolymer (H-PP), has

i) a melt flow rate $MFR_2$ (230°C) determined according to ISO 1133 in the range of 40.0 to 120.0 g/10 min, and/or
ii) a melting temperature Tm determined by the method as described in the examples in the range from 158 to 168°C.

**8.** Foamable polypropylene composition (C) according to any one of the preceding claims, wherein the foaming agent (FA) is a chemical foaming agent, preferably a bicarbonate or a mixture of citric acid and bicarbonate.

**9.** Foamable polypropylene composition (C) according to any one of the preceding claims, having before foaming

i) a melt flow rate $MFR_2$ (230°C) determined according to ISO 1133 in the range of 1.0 to 40.0 g/10 min, and/or
ii) a Charpy Impact Strength (NIS+23) measured according to ISO 179-1eA:2000 at +23°C of at least 14 $kJ/m^2$, like in the range of 14 to 60 $kJ/m^2$, and/or
iii) a flexural modulus according to ISO 178 on plaques of 2 mm thickness of at least 1300 MPa, like in the range of 1300 to 2600 MPa, and/or
iv) a puncture energy measured according to ISO 6603-2 (on 60x60x2 $mm^3$ specimens) at +23°C of at least 28 J, like in the range of 28 to 38 J.

**10.** Foamable polypropylene composition (C) according to any one of the preceding claims, having after foaming on plaques of 3 mm thickness

i) a flexural modulus according to ISO 178 of at least 800 MPa, like in the range of 800 to 1900 MPa, and/or
ii) a puncture energy measured according to ISO 6603-2 (on 60x60x2 $mm^3$ specimens) at +23°C of at least 10 J, like in the range of 10 to 28 J.

**11.** Use of the foamable polypropylene composition (C) according to any one of claims 1 to 10 for the production of a foamed part.

**12.** Foamed part, preferably foamed automotive part, comprising the foamable polypropylene composition (C) according to any one of claims 1 to 10.

## Patentansprüche

**1.** Schäumbare Polypropylenzusammensetzung (C), umfassend

a) ein heterophasiges Propylen-Copolymer (HECO1) mit einer Schmelzflussrate $MFR_2$ (230°C, 2,16 kg), gemessen nach ISO 1133, im Bereich von 3 bis 10 g/10min und einer in Xylol kalt löslichen (XCS) Fraktion, bestimmt bei 25°C nach ISO 16152, im Bereich von 10,0 bis 30,0 Gew.-%, wobei das heterophasige Propylen-Copolymer (HECO1) umfasst

i) eine Matrix (M1), die ein Propylenpolymer (PP1) ist, und
ii) ein elastomeres Propylen-Copolymer (E1), das in dieser Matrix dispergiert ist,

b) ein Propylen-Homopolymer (H-PP),
c) gegebenenfalls einen anorganischen Füllstoff (F), wobei der anorganische Füllstoff (F) Talk und/oder Ruß ist, und
d) mindestens ein Schäumungsmittel (FA), ausgewählt aus chemischen und physikalischen Schäumungsmitteln, wobei die Zusammensetzung (C) umfasst:

i) 68,0 bis 96,99 Gew.-% des heterophasigen Propylen-Copolymers (HECO1),
ii) 3,0 bis 30,0 Gew.-% des Propylen-Homopolymers (H-PP),
iii) 0 bis 18,0 Gew.-% des anorganischen Füllstoffs (F), und
iv) 0,01 bis 4,0 Gew.-% des Schäumungsmittels (FA),

bezogen auf die gesamte Polypropylenzusammensetzung (C).

**2.** Schäumbare Polypropylenzusammensetzung (C) nach Anspruch 1, wobei das heterophasige Propylencopolymer (HECO1) aufweist

i) einen nach der in den Beispielen beschriebenen Methode bestimmten Comonomergehalt der in Xylol kalt löslichen (XCS) Fraktion ≤ 45,0 Mol-%, vorzugsweise ≤ 40,0 Mol-%, besonders bevorzugt zwischen 5,0 und 40,0 Mol-%, und/oder
ii) eine intrinsische Viskosität (IV) der in Xylol kalt löslichen (XCS) Fraktion, bestimmt nach der in den Beispielen beschriebenen Methode, > 3,5 dl/g.

**3.** Schäumbare Polypropylenzusammensetzung (C) nach Anspruch 1 oder 2, die ferner ein heterophasisches Propylencopolymer (HECO2) umfasst, umfassend

i) eine Matrix (M2), die ein Propylenpolymer (PP2) ist, und
ii) ein elastomeres Propylen-Copolymer (E2), das in dieser Matrix dispergiert ist.

**4.** Schäumbare Polypropylenzusammensetzung (C) nach Anspruch 3, wobei das heterophasige Propylencopolymer (HECO2) folgende Eigenschaften aufweist

i) eine Schmelzflussrate $MFR_2$ (230°C, 2,16 kg), gemessen nach ISO 1133 im Bereich von 50 bis 120 g/10min, und/oder
ii) einer in Xylol kalt lösliche (XCS) Fraktion, bestimmt bei 25°C gemäß ISO 16152 im Bereich von 12,0 bis 35,0 Gew.-%,
und/oder
iii) einen Comonomergehalt der Xylol kalt löslichen (XCS) Fraktion, bestimmt nach der in den Beispielen beschriebenen Methode, im Bereich von 35,0 bis 65,0 Mol-%, und/oder
iv) eine intrinsische Viskosität (IV) der in Xylol kalt löslichen (XCS) Fraktion, bestimmt nach der in den Beispielen beschriebenen Methode, < 3,5 dl/g.

**5.** Schäumbare Polypropylenzusammensetzung (C) nach Anspruch 4, die ferner ein Polyethylen hoher Dichte (HDPE) und/oder ein Plastomer (PL) umfasst, das ein Copolymer aus Ethylen und einem $C_4$ bis $C_8$ $\alpha$-Olefin ist.

**6.** Schäumbare Polypropylenzusammensetzung (C) nach einem der vorhergehenden Ansprüche, wobei die Matrix (M1) des heterophasigen Propylencopolymers (HECO1) und/oder die Matrix (M2) des heterophasigen Propylencopolymers (HECO2) eine Schmelzflussrate $MFR_2$ (230°C, 2,16 kg), gemessen nach ISO 1133, im Bereich von 50,0 bis 200,0 g/10min hat/haben.

**7.** Schäumbare Polypropylenzusammensetzung (C) nach einem der vorhergehenden Ansprüche, wobei das Propylenhomopolymer (H-PP), vorzugsweise ein teilkristallines Propylenhomopolymer (H-PP), aufweist

i) einer Schmelzflussrate $MFR_2$ (230°C), bestimmt nach ISO 1133, im Bereich von 40,0 bis 120,0 g/10 min, und/oder
ii) eine Schmelztemperatur Tm, bestimmt nach der in den Beispielen beschriebenen Methode, im Bereich von 158 bis 168°C.

**8.** Schäumbare Polypropylenzusammensetzung (C) nach einem der vorhergehenden Ansprüche, wobei das Schäumungsmittel (FA) ein chemisches Schäumungsmittel ist, vorzugsweise ein Bicarbonat oder eine Mischung aus Zitronensäure und Bicarbonat.

**9.** Schäumbare Polypropylenzusammensetzung (C) nach einem der vorhergehenden Ansprüche, die vor dem Aufschäumen

i) einer Schmelzflussrate $MFR_2$ (230°C), bestimmt nach ISO 1133, im Bereich von 1,0 bis 40,0 g/10 min, und/oder
ii) eine Charpy-Schlagzähigkeit (NIS+23), gemessen nach ISO 179-1eA:2000 bei +23°C, von mindestens 14 $kJ/m^2$, etwa im Bereich von 14 bis 60 $kJ/m^2$, und/oder
iii) einen Biegemodul nach ISO 178 an Platten von 2 mm Dicke von mindestens 1300 MPa, etwa im Bereich von 1300 bis 2600 MPa, und/oder
iv) eine nach ISO 6603-2 (an 60x60x2 $mm^3$Proben) bei +23°C gemessene Durchstoßenergie von mindestens 28 J, etwa im Bereich von 28 bis 38 J,

aufweisen.

**10.** Schäumbare Polypropylenzusammensetzung (C) nach einem der vorhergehenden Ansprüche, die nach dem Aufschäumen auf Platten von 3 mm Dicke

i) einen Biegemodul nach ISO 178 von mindestens 800 MPa, wie im Bereich von 800 bis 1900 MPa, und/oder
ii) eine nach ISO 6603-2 (an 60x60x2 $mm^3$Proben) bei +23°C gemessene Durchstoßenergie von mindestens 10 J, etwa im Bereich von 10 bis 28 J,

aufweisen.

**11.** Verwendung der schäumbaren Polypropylenzusammensetzung (C) nach einem der Ansprüche 1 bis 10 zur Herstellung eines geschäumten Teils.

**12.** Geschäumtes Teil, vorzugsweise geschäumtes Automobilteil, umfassend die schäumbare Polypropylenzusammensetzung (C) nach einem der Ansprüche 1 bis 10.

## Revendications

**1.** Composition de polypropylène moussante (C) comprenant

a) un copolymère de propylène hétérophasique (HECO1) présentant un indice de fluidité à chaud $MFR_2$ (230 °C, 2,16 kg) mesuré selon la norme ISO 1133 dans la plage de 3 à 10 g/10 min et une fraction soluble à froid dans le xylène (XCS) déterminée à 25° C selon la norme ISO 16152 dans la plage de 10,0 à 30,0 % en poids, ledit copolymère de propylène hétérophasique (HECO1) comprenant

i) une matrice (M1) étant un polymère de propylène (PP1) et
ii) un copolymère de propylène élastomère (E1) étant dispersé dans ladite matrice,

b) un homopolymère de propylène (H-PP),
c) optionnellement une charge inorganique (F), dans laquelle la charge inorganique (F) est du talc et/ou du noir de carbone, et
d) au moins un agent moussant (FA) sélectionné parmi des agents moussants chimiques et physiques, selon laquelle la composition (C) comprend :

i) 68,0 à 96,99 % en poids du copolymère de propylène hétérophasique (HECO1),
ii) 3,0 à 30,0 % en poids de l'homopolymère de propylène (H-PP),
iii) 0 à 18,0 % en poids de la charge inorganique (F), et
iv) 0,01 à 4,0 % en poids de l'agent moussant (FA), sur la base de la composition de polypropylène (C) totale.

**2.** Composition de polypropylène moussante (C) selon la revendication 1, dans laquelle le copolymère de propylène hétérophasique (HECO1) présente

i) une teneur en comonomère de la fraction soluble à froid dans le xylène (XCS) déterminée par le procédé décrit dans les exemples ≤ 45,0 % en moles, de préférence ≤ 40,0 % en moles, de manière davantage préférée entre 5,0 et 40,0 % en moles, et/ou
ii) une viscosité intrinsèque (IV) de la fraction soluble à froid dans le xylène (XCS) déterminée par le procédé décrit dans les exemples > 3,5 dl/g.

**3.** Composition de polypropylène moussante (C) selon la revendication 1 ou 2, comprenant en outre un copolymère de propylène hétérophasique (HECO2) comprenant

i) une matrice (M2) étant un polymère de propylène (PP2) et
ii) un copolymère de propylène élastomère (E2) étant dispersé dans ladite matrice.

**4.** Composition de polypropylène moussante (C) selon la revendication 3, dans laquelle le copolymère de propylène hétérophasique (HECO2) présente

i) un indice de fluidité à chaud $MFR_2$ (230 °C, 2,16 kg) mesuré selon la norme ISO 1133 dans la plage de 50 à 120 g/10 min, et/ou
ii) une fraction soluble à froid dans le xylène (XCS) déterminée à 25 °C selon la norme ISO 16152 dans la plage de 12,0 à 35,0 % en poids, et/ou
iii) une teneur en comonomère de la fraction soluble à froid dans le xylène (XCS) déterminée par le procédé décrit dans les exemples dans la plage de 35,0 à 65,0 % en moles, et/ou
iv) une viscosité intrinsèque (IV) de la fraction soluble à froid dans le xylène (XCS) déterminée par le procédé décrit dans les exemples < 3,5 dl/g.

**5.** Composition de polypropylène moussante (C) selon la revendication 4, comprenant en outre un polyéthylène haute densité (HDPE) et/ou un plastomère (PL) étant un copolymère d'éthylène et d'une $\alpha$-oléfine en $C_4$ à $C_8$.

**6.** Composition de polypropylène moussante (C) selon l'une des revendications précédentes, dans laquelle la matrice (M1) du copolymère de propylène hétérophasique (HECO1) et/ou la matrice (M2) du copolymère de propylène hétérophasique (HECO2) présente(nt) un indice de fluidité à chaud $MFR_2$ (230 °C, 2,16 kg) mesuré selon la norme ISO 1133 dans la plage de 50,0 à 200,0 g/10 min.

**7.** Composition de polypropylène moussante (C) selon l'une des revendications précédentes, dans laquelle l'homopolymère de propylène (H-PP), de préférence un homopolymère de propylène semi-cristallin (H-PP), présente

i) un indice de fluidité à chaud $MFR_2$ (230 °C) déterminé selon la norme ISO 1133 dans la plage de 40,0 à 120,0 g/10 min, et/ou
ii) une température de fusion Tm déterminée par le procédé décrit dans les exemples dans la plage de 158 à 168 °C.

**8.** Composition de polypropylène moussante (C) selon l'une des revendications précédentes, dans laquelle l'agent moussant (FA) est un agent moussant chimique, de préférence un bicarbonate ou un mélange d'acide citrique et de bicarbonate.

**9.** Composition de polypropylène moussante (C) selon l'une des revendications précédentes, présentant avant moussage

i) un indice de fluidité à chaud $MFR_2$ (230 °C) déterminé selon la norme ISO 1133 dans la plage de 1,0 à 40,0 g/10 min, et/ou
ii) une résistance à l'impact Charpy (NIS+23) mesurée selon
ISO 179-1eA:2000 à +23 °C d'au moins 14 $kJ/m^2$, comme dans la plage de 14 à 60 $kJ/m^2$, et/ou
iii) un module d'élasticité en flexion selon la norme ISO 178 sur plaques de 2 mm d'épaisseur d'au moins 1300 MPa, tel que dans la plage de 1300 à 2600 MPa, et/ou
iv) une énergie de perforation mesurée selon la norme ISO 6603-2 (sur éprouvettes 60x60x2 $mm^3$) à +23 °C d'au moins 28 J, telle que dans la plage de 28 à 38 J.

**10.** Composition de polypropylène moussante (C) selon l'une des revendications précédentes, présentant après moussage sur plaques de 3 mm d'épaisseur

i) un module d'élasticité en flexion mesuré selon la norme ISO 178 d'au moins 800 MPa, tel que dans la plage de 800 à 1900 MPa, et/ou
ii) une énergie de perforation mesurée selon la norme ISO 6603-2 (sur éprouvettes 60x60x2 $mm^3$) à +23 °C d'au moins 10 J, telle que dans la plage de 10 à 28 J.

**11.** Utilisation de la composition de polypropylène moussante (C) selon l'une des revendications 1 à 10 pour la production d'une pièce en mousse.

**12.** Pièce en mousse, de préférence pièce automobile en mousse, comprenant la composition de polypropylène moussante (C) selon l'une des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3330315 A1
- WO 2016005301 A1
- EP 3112417 A1
- WO 9924478 A
- WO 9924479 A
- WO 0068315 A
- EP 0887379 A
- WO 9212182 A
- WO 2004000899 A
- WO 2004111095 A
- WO 8707620 A
- WO 9219653 A
- WO 9219658 A
- EP 0491566 A
- US 5272236 A
- WO 2010149529 A
- EP 491566 A
- EP 591224 A
- EP 586390 A


### Non-patent literature cited in the description


- **HANS ZWEIFEL**. Plastic Additives Handbook. 2001, 967-990
- **HANS ZWEIFEL**. Plastic Additives Handbook. 2009, 1141-1190
- **SINGH, G.** ; **KOTHARI, A** ; **GUPTA, V.** *Polymer Testing*, 2009, vol. 28 (5), 475
- **ZHOU, Z** ; **KUEMMERLE, R** ; **QIU, X.** ; **REDWINE, D.** ; **CONG, R** ; **TAHA, A** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R** ; **PELLECCHIA, R** ; **SEVERN, J.** ; **TALARICO, G**. *Macromol. Rapid Commun.*, 2007, vol. 28, 1128
- **CHENG, H. N.** *Macromolecules*, 1984, vol. 17, 1950
- **RESCONI, L** ; **CAVALLO, L** ; **FAIT, A.** ; **PIEMONTESI, F**. *Chem. Rev.*, 2000, vol. 100, 1253
- **WANG, W-J** ; **ZHU, S**. *Macromolecules*, 2000, vol. 33, 1157
- **BUSICO, V.** ; **CIPULLO, R**. *Prog. Polym. Sci.*, 2001, vol. 26, 443
- **BUSICO, V** ; **CIPULLO, R.** ; **MONACO, G** ; **VACATELLO, M** ; **SEGRE, A.L.** *Macromoleucles*, 1997, vol. 30, 6251
- **RESCONI, L.** ; **CAVALLO, L.** ; **FAIT, A** ; **PIEMONTESI, F.** *Chem. Rev.*, 2000, vol. 100, 1253
- **CHENG, H. N**. *Macromolecules*, 1984, vol. 17, 1950
- **WANG, W-J** ; **ZHU, S.** *Macromolecules*, 2000, vol. 33, 1157
- **KAKUGO, M** ; **NAITO, Y** ; **MIZUNUMA, K** ; **MIYATAKE, T**. *Macromolecules*, 1982, vol. 15, 1150
- **KLIMKE, K** ; **PARKINSON, M** ; **PIEL, C.** ; **KAMINSKY, W.** ; **SPIESS, H.W** ; **WILHELM, M**. *Macromol. Chem. Phys.*, 2006, vol. 207, 382
- **PARKINSON, M** ; **KLIMKE, K.** ; **SPIESS, H.W.** ; **WILHELM, M.** *Macromol. Chem. Phys.*, 2007, vol. 208, 2128
- **CASTIGNOLLES, P** ; **GRAF, R.** ; **PARKINSON, M.** ; **WILHELM, M** ; **GABORIEAU, M**. *Polymer*, 2009, vol. 50, 2373
- NMR Spectroscopy of Polymers: Innovative Strategies for Complex Macromolecules. 2011, vol. 401
- **POLLARD, M** ; **KLIMKE, K** ; **GRAF, R** ; **SPIESS, H.W** ; **WILHELM, M** ; **SPERBER, O** ; **PIEL, C** ; **KAMINSKY, W.** *Macromolecules*, 2004, vol. 37, 813
- **KLIMKE, K.** ; **PARKINSON, M.** ; **PIEL, C** ; **KAMINSKY, W.** ; **SPIESS, H.W** ; **WILHELM, M.** *Macromol. Chem. Phys.*, 2006, vol. 207, 382
- **FILIP, X.** ; **TRIPON, C** ; **FILIP, C**. *J. Mag. Resn.*, 2005, vol. 176, 239
- **GRIFFIN, J.M.** ; **TRIPON, C** ; **SAMOSON, A** ; **FILIP, C** ; **BROWN, S.P**. *Mag. Res. in Chem.*, 2007, vol. 45 (S1), S198
- **J. RANDALL**. *Macromol. Sci., Rev. Macromol. Chem. Phys.*, 1989, vol. C29, 201
- **LIU, W** ; **RINALDI, P** ; **MCINTOSH, L.** ; **QUIRK, P**. *Macromolecules*, 2001, vol. 34, 4757
- **QIU, X** ; **REDWINE, D** ; **GOBBI, G** ; **NUAMTHANOM, A** ; **RINALDI, P**. *Macromolecules*, 2007, vol. 40, 6879
- **SYBILLE FRANK et al.** *PPS 25 Intern. Conf. Polym. Proc. Soc*, 2009

- *Proceedings of the SPIE*, 2008, vol. 6831, 68130T-68130T, 8